# EUROPÄISCHE PATENTSCHRIFT

(11) **EP 2 131 085 B1**
(45) Veröffentlichungstag und Bekanntmachung des Hinweises auf die Patenterteilung: **12.01.2011**
(21) Anmeldenummer: 08010317.9
(22) Anmeldetag: 06.06.2008
(51) Int. Cl.: F16L 5/08, F16L 7/02, H02G 3/22

(54) **Leitungsdurchführung mit Schichtenfolge**
Conduit lead through with sequence of layers
Traversée de conduite avec succession de couches

(43) Veröffentlichungstag der Anmeldung: 09.12.2009
(73) Patentinhaber: Hauff-Technik GmbH & Co. KG, 89542 Herbrechtingen (DE)
(72) Erfinder: Egritepe, Senol, 89520 Heidenheim (DE); Heck, Martin, 89447 Zöschingen (DE); Seibold, Michael, 81249 München (DE)
(74) Vertreter: Szynka, Dirk

(56) Entgegenhaltungen:
- EP-A- 1 843 071
- EP-B1- 0 177 518
- WO-A-2005/057749
- DE-A1- 10 347 653
- DE-B- 1 218 237
- DE-B3- 10 313 306
- DE-C1- 3 828 693
- DE-C1- 3 917 447
- DE-U1- 20 104 279
- DE-U1-202004 011 202
- FR-A- 2 549 651
- FR-A- 2 590 347
- GB-A- 1 021 457
- US-A- 2 117 152

## Beschreibung

Die Erfindung betrifft eine Vorrichtung zum abgedichteten Durchrühren einer Leitung durch eine Wandöffnung, die im Folgenden der Einfachheit halber als Leitungsdurchführung bezeichnet wird.

Leitungsdurchführungen sind umfangreich in Gebrauch, insbesondere in Gebäudewänden. Leitungsdurchführungen sind zudem auch für das dichte Hindurchführen von Leitungen durch andere Wände als Gebäudewände bekannt, etwa bei Schiffen etc. Eine Wand im Sinne der Erfindung ist also eine dichte Begrenzung eines Bereichs. Dabei sind Innen- oder Außenwände beispielsweise von Luft-, Wasser-, Raum- oder Landfahrzeugen, von Maschinen oder technischen Anlagen bevorzugt, wobei die Abdichtung Flüssigkeiten und/oder Gase betreffen kann. Es kann sich aber auch um Gehäusewände von technischen Geräten handeln, etwa aus Metall oder Potymermaterialien. Die Leitung ist vorzugsweise eine Strom-, gas-, Wasser-, Wärme-, Telekommunkations- oder anderweitige Signal- oder Datenleitung. Die Leitung kann starr oder flexibel sein.

Leitungsdurchführungen weisen regelmäßig Elastomerkörper auf, die durch eine Verpressung mittels einer Spannvorrichtung beaufschlagt und in eine dichte Anlage an die Leitung gebracht werden können. Dabei werden gelegentlich auch Umhüllungen für die Leitung eingesetzt, so dass der Elastomerkörper beispielsweise ein Rohrstück abdichtet, durch das dann ein Kabel geführt ist, das gegebenenfalls zusätzlich abgedichtet sein kann. Der Begriff der "Leitung" bezieht sich also auch auf lediglich für die Strecke der Durchführung vorgesehenen Umhüllungen, in denen eine weitere Leitung angeordnet ist.

In der Regel wird durch die Vorpressung des Elastomerkörpers auch eine dichtende Anlage an eine Mantelinnehfläche der Wandöffnung oder einen eingesetzten Rahmen, jedenfalls eine Laibung, vorgenommen. Dies ist allerdings in Zusammenhang mit der folgenden Erfindung nicht zwingend. Vielmehr kann die Leitungsdurchführung beispielsweise auch dicht eingeschraubt oder anderweitig dicht befestigt sein, ohne dass es für die Dichtheit zwischen Leitungsdurchführung und Laibung auf die Verpressung des Elastomerkörpers ankommt.

In der Praxis sind nicht nur unterschiedliche Leitungstypen abzudichten, sondern vor allem auch unterschiedliche Leitungsquerchnitte. Auch. wenn diese in der Regel kreisrund sind, was für die Erfindung ebenfalls nicht zwingend ist, so variieren die Durchmesser. In manchen Fällen werden dementsprechend individuell angepasste Elastomerkörper vorgehalten und eingesetzt, weil sich durch die Verpressung und elastische Verformung des Elastomerkörpers keine beliebig großen Distanzen überbrücken lassen.

Zudem ist es bekannt, beispielsweise aus der EP 1 843 071 A1, Elastomerkörper mit einer Schichtenfolge von Schichten aufzubauen, die jeweils die Leitung umschließen. Diese Schichten werden im Stand der Technik gelegentlich auch als "Zwiebelschalen" oder "Zwiebelringe" bezeichnet. In manchen Fällen sind sie auf einer Seite durch relativ dünne Brücken miteinander verbunden, in anderen Fällen lose. Jedenfalls dienen sie dazu, durch Entnahme einer bestimmten Zahl von Schichten, von innen beginnend, eine radiale Anpassung einer Öffnung in dem Elastomerkörper an einen bestimmten Leitungsquerschnitt vorzunehmen.

Die FR 2 549 651 A beschreibt einen Verschluss für ein Rohr, bei dem eine Folge von elastischen Scheiben auf ein durch das Rohr geführtes Kabel aufgefädelt, also in axialer Richtung aufeinander folgend angeordnet werden. Die Scheiben werden gegeneinander axial verpresst, sodass sie In radialer Richtung expandieren und nach innen gegen die Leitung und nach außen gegen die Rohrinnenseite dichten. Dabei werden auch konzentrische, mit zunehmender Schnitttiefe konisch nach außen laufende Einschnitte in den Scheiben beschrieben, welche einer Erhöhung der axialen Kompressibilität der Scheiben dienen.

Einen diesem Rohrverschluss im Wesentlichen entsprechenden zeigt auch die FR 2 590 347 A, wobei hier die Einschnitte nicht konisch, sondern parallel zur Leitungsrichtung erfolgen.

Die WO 2005/057749 A zeigt eine Leitungsdurchführung durch eine Wand mit in einen Rahmen einsetzbaren und in diesem verspannbaren Elastomerkörpern, die jeweils durch einen Schnitt in zwei Halbschalen unterteilt sind. In diesen Halbschalen sind abziehbare Lagen zur Anpassung an unterschiedliche Kabeldurchmesser vorgesehen.

Der Oberbegriff des Anspruches 1 basiert jedoch auf der EP 0 177 518 B1. Dort ist nicht von einer Schichtenfolge die Rede; vielmehr geht es dort um das Eingreifen und Stützen eines nach radial innen außen dichtenden Elastomerkörperteils durch ein zweites Elastomerkörpertell, das durch Brandschutzzusätze härter und weniger elastisch ist. Eine Dimensionsanpassung findet nicht statt, und eine Spanneinrichtung ist nicht erwähnt.

Von diesem Stand der Technik ausgehend liegt der Erfindung das technische Problem zugrunde, eine hinsichtlich der Anpassung an Leitungsdimensionen verbesserte Leitungsdurchführung und ein entsprechendes Herstellungsverfahren anzugeben.

Die Lösung dieses Problems besteht in einer Leitungsdurchführung zum Aufbauen eines dichtenden Verschlusses einer von einer Leitung durchsetzten Öffnung in einer Wand mit einem Elastomerkörper zur dichten Anlage an der Leitung aus zumindest zwei für sich einstückigen Teilen, wobei die Elastomerkörperteile dazu ausgelegt sind, im zusammengebauten Zustand eine Folge einer Vielzahl Schichten zu bilden, welche Schichten jeweils die Leitung umschließen, und wobei eine Mehrzahl der Schichten zu einem einZigen Elastomerkörperteil gehört und hinsichtlich ihres unterschiedlichen Abstandes zur Mittenachse der Leitung benachbarte Schichten zu verschiedenen Elastomerkörperteilen gehören, **dadurch gekennzeichnet, dass** hinsichtlich der den Abstand zur Leitung bestimmenden Richtung mindestens zwei Elastomerkörpertellen, zu denen jeweils eine Mehrzahl der Schichten gehört, vorgesehen sind, und durch eine Spanneinrichtung zum Spannen des Elastomerkörpers und dadurch dichten Anpressen des Elastomerkörpers auf die Leistung.

Daneben richtet sich die Erfindung auf Verwendungen der Leitungsdurchführung und ein Herstellungsverfahren hierzu.

Bevorzugte Ausgestaltungen sind in den abhängigen Ansprüchen vorgesehen, wobei sich einige dieser Ausgestaltungen auch auf Sätze bzw. Systeme mit einer Mehrzahl solcher Leitungsdurchführungen beziehen. Die Erfindung richtet sich auch auf besondere Verwendungen. Rein vorsorglich wird darauf hingewiesen, dass die folgende Beschreibung der Erfindung und der bevorzugten Merkmale auch für andere Anspruchskategorien relevant ist, insbesondere für Verfahren zum Abdichten von Leitungen in Wandöffnungen.

Für die Erläuterung der Erfindung wird der Begriff des "Elastornerkörperteils" verwendet. Damit sind in sich zusammenhängende und einstückige Elastomerteile gemeint. Der Begriff soll also nicht auf eine Mehrzahl separater Teile zu lesen sein. Erfindungsgemäß gehören benachbarte Schichten aus der Schichtenfolge zu verschiedenen Elastomerkörperteilen. Soweit im Stand der Technik Elastomerkörperteile mit einer Mehrzahl Schichten bekannt waren, also zusammenhängende Zwiebelschalen, waren diese direkt benachbart und lediglich durch dünne zylindrische Schlitze getrennt. Im Unterschied dazu sollen bei der Erfindung zwischen zu einem einzigen Eiastomerkörperteil gehörenden Schichten jeweils eine oder auch eine Mehrzahl Schichten anderer Elastomerkörperteile liegen. Im Unterschied zu konventionellen Lösungen mit völlig losen Zwiebelschalen gehören dabei eine Mehrzahl Schichten zu einem Elastomerkörperteil, wobei weitere Schichten durchaus einzeln auftreten können.

Mit dem Begriff "benachbart" sind dabei Nachbarschaften mit unterschiedlichem Abstand zur Mittenachse der Leitung gemeint, also bei den üblichen zylindrischen Geometrien radial Nachbarschaften. Im Stand der Technik sind bereits geschlitzte Zwiebelschalenfolgen bekannt, die zum Einlegen von Leitungen auseinandergenommen oder aufgeklappt werden können. Solche Schlitze verlaufen dann nicht um die Leitung herum, sondern auf sie zu oder von ihr weg, also bei Zylindergeometrien insbesondere radial. Sie sind bei dieser Erfindung ebenfalls möglich und sogar bevorzugt. Durch solche Schlitze getrennte Teile einer ansonsten gleichen Zwiebelschale oder Schicht sollen nicht mit "benachbart" gemeint sein, der Begriff bezieht sich also auf radiale und nicht auf in Umfangsrichtung bestehende Nachbarschaften.

Aus der erläuterten Zugehörigkeit benachbarter Schichten zu verschiedenen Elastomerkörperteilen ergibt sich, dass bei einem Elastomerkörperteil mit einer Mehrzahl Schichten zwischen diesen Schichten mindestens der Stärke weiterer Schichten entsprechende Zwischenräume vorhanden sind. Das Elastomerkörperteil lässt sich damit besonders einfach herstellen, etwa durch Spritzguss. Das Schneiden von dünnen Schlitzen zwischen den Zwiebelschalen mit einem dünnen Werkzeug kann vermieden werden, also insbesondere der Umgang mit runden in sich geschlossenen Schnittlinien und einer Mehrzahl radial bzw. hinsichtlich des Abstands zur Leitung gestaffelter Schlitze. Die Schneidevorgänge sind relativ aufwändig, und können erfindungsgemäß durch entsprechende Gestaltung einer Spritzgussform oder eine andere geschickte Auslegung des Kunststoffherstellprozesses ersetzt werden.

Durch die Zwischenräume zwischen den Schichten desselben Elastomerkörpers sind die Schichten dann im Querschnitt betrachtet quasi wie Zinken eines Kamms aufgebaut, wobei in die Zwischenräume zwischen den Zinken andere Schichten eingebracht werden, wenn der Elastomerkörper und die Leitungsdurchführung zusammengebaut und eingesetzt werden. Dabei können die anderen Schichten ebenfalls in einer Mehrzahl zu einem einzigen Elastomerkörperteil gehören, so dass, um beim Bild des Kamms zu bleiben, gewissermaßen Kämme ineinander greifen. Es können auch weitere einzelne Schichten verwender werden, die ja ebenfalls ohne das Schneiden von Schlitzen herzustellen sind, wiederum etwa durch Spritzguss oder andere eingeführte Verfahren für Elastomerformkörper.

Infolge der beschriebenen Zwischenräume zwischen den Schichten desselben Elastomerkörpers sind die Verbindungsstege zwischen diesen Schichten stärker als bei den nur durch dünne geschnittene Schlitze getrennten Schichten im Stand der Technik. Bei einer ausreichend schmalen (in Leitungsrichtung) Auslegung lassen sie sich daher auch als Scharniere oder Biegegelenke einsetzen. Die Schichten lassen sich damit, wie weiter unten noch erklärt, um diese Verbindungsstege herum ausklappen. Bei konventionellen Zwiebelschalenfolgen, die nur durch geschnittene Schlitze getrennt sind, fehlt hierfür die ausreichende radiale Stärke. Für eine ausreichende Biegsamkeit müssten die Stege dann (in Leitungsrichtung) so schmal sein, dass sie leicht abreißen.

Die breitere Ausgestaltung der Verbindungsstege hat außerdem den Vorteil, dass die an der den Schichten entgegengesetzten Stirnfläche des Elastomerkörperteils jeweils pro Schicht zur Verfügung stehende Dicke oder Ringbreite, die sich aus der Stegstärke und der Schichtstärke zusammensetzt, deutlich größer ist als im Stand der Technik, bei äquidistanten Schichten beispielsweise etwa doppelt so groß. Diese Stirnfläche eignet sich damit sehr viel besser für Beschriftungen oder anderweitige Markierungen, mit denen der Monteur auch ohne Ausprobieren direkt ermitteln kann, welche Schichten auszuklappen oder zu entfernen sind, und welche nicht.

Hinsichtlich der den Abstand zur Leitung bestimmenden Richtung, also bei zylindrischen Geometrien radial, gibt es erfindungsgemäß zumindest zwei Elastomerkörper teile mit jeweils einer Mehrzahl zugehöriger Schichten, bei bestimmten Ausführungsformen sind es genau zwei, bei anderen Ausführungsformen aber auch drei, wozu auf die Beispiele verwiesen wird. Auch mehr als drei Elastomerkörperteile mit jeweils einer Mehrzahl Schichten sind denkbar. Damit sind nicht durch Schlitze in Richtung zu der Leitung oder von der Leitung weg (zum Aufklappen oder Auseinandernehmen der Schichtenfolge) vorgenommene Trennungen gemeint. Eine Ausführungsform mit beispielsweise genau zwei in einer die Leitung enthaltenden Schnittebene zusammenhängenden Elastomerkörperteilen kann infolge solcher Schlitze durchaus vier (bei einem durchgehenden radialen Schlitz) oder mehr (bei mehr als einem Schlitz) separate einstückige Elastomerkvrperteile enthalten. Die Bevorzugung der Zahlen von zwei oder drei einstückigen Elastornerkörpertellen bezieht sich also auf ein Bild in einer die Leitung enthaltenden Schnittebene, bei dem solche Schlitze in radialer oder allgemeiner zur Leitung und von ihr weg führender Richtung vernachlässigt sind.

Bevorzugt ist ferner, dass alle verwendeten Schichten in der Schichtenfolge jeweils als Mehrzahl zu einem Elastomerkörperteil gehören, also keine einzelnen Zwiebelschalen auftreten. Zwar können die einzelnen Zwiebelschalen leicht hergestellt werden, jedoch vergrößern sie die Zahl der Einzelteile und damit letztlich doch die Komplexität der Herstellung, insbesondere aber auch die Komplexität beim Zusammenbauen und Anpassen der erfindungsgemäßen Leitungsdurchführung an ein bestimmtes Leitungsformat.

Es wurde bereits erwähnt, dass die einzelnen Schichten die Leitung umschließen, also gewissermaßen eine Mantelfläche (mit einer bestimmten Dicke) eines gedachten Körpers bilden, der die Leitung enthält. (Auch hier werden die von außen zur Leitung hin und von ihr weg nach außen führenden Schlitze vernachlässigt.) Dieser gedachte Körper inuss hinsichtlich der Leitung nicht zwingend symmetrisch oder zentriert sein. Dies ist jedoch bevorzugt. Weiterhin sind die Schichten der Elastomerkörperteile, die eine Mehrzahl Schichten aufweisen, bei zumindest zwei Eiastomerkörperteilen vorzugsweise an einem Ende, bezogen auf die Leitungsrichtung, miteinander verbunden, und nicht mittig. Um im Bild des Kamms zu bleiben: Die Zinken ragen also zu einer Seite von der Basis des Kamms weg und nicht zu gegenüberliegenden Seiten. Dabei bilden die Schichten eines Elastomerkörperteils also jeweils an einem Ende miteinander verbundene Hohlkörper. Eine mittige Schicht, die zum Verschluss der Wandöffnung auch ganz ohne Leitung vorgesehen sein kann, bildet insoweit eine Ausnahme, als sie natürlich nicht mehr hohl ist.

Im Übrigen könnte bei einer bevorzugten Ausgestaltung ein drittes Elastomerkörperteil dahingehend eine Ausnahme bilden, als dort die Verbindung zwischen den Schichten nicht an einem Ende sondern an einer Stelle zwischen den Enden vorgesehen ist, der Kamm also gewissermaßen zu gegenüberliegenden Seiten Zinken aufweist. Dieser Elastomerkörperteil kann dann zwischen zwei wie zuvor beschrieben aufgebaute Elastomerkörperteile gesetzt werden, um insgesamt mit drei Elastomerkörperteilen (oder auch bei analog dem dritten aufgebauten weiteren Elastomer körperteilen mehr als dreien) den Elastomerkörper zu bilden. Zur Veranschaulichung wird auf die Beispiele verwiesen.

Insbesondere ein solcher dritter Elastomerkörperteil kann Funktionszusätze enthalten, etwa dispergierte Festkörperartikel, die bestimmte zusätzliche technische Eigenschaften (zusätzlich zu den elastischen Eigenschaften) hervorrufen, etwa eine Leitfähigkeit zur EMV-Abschirmung, eine Röntgenabsorption oder Brandschutzeigenschaften.

In Zusammenhang mit der erwähnten Rotationssymmetrie sind natürlich zunächst zylindrische Geometrien in Betracht zu ziehen (wobei natürlich wieder die zu der Leitung und von ihr weg führenden Schlitze vernachlässigt sind), die im Stand der Technik bereits bekannt und verbreitet sind. Im Stand der Technik sind die Zwiebelschalen dabei äquidistant, müssen es im Rahmen dieser Erfindung aber nicht zwingend sein. Es kann praktisch sein, verschiedene Stärken von Zwiebellagen zu verwenden, etwa mit dem Abstand zur Leitung zunehmende, insbesondere proportional zunehmende (und damit eine gleichbleibende relative Anpassbarkeit sicherstellende) Schichtendicken. Die Schichtendicken können auch an bestehende genormte oder anderweitig in der. Praxis etablierte Leitungsdurchmesserverteilungen angepasst und dementsprechend in bestimmten Bereichen enger und in anderen gröber gestaffelt sein.

Die Erfindung richtet sich aber auch auf eine besondere nicht zylindrische Ausgestaltung mit zumindest teilweise konischen Mantelflächen der Schichten, wobei die "Steigung" vorzugsweise relativ gering ist, nämlich der die "Steigung" der konischen Mantelfläche bestimmende halbe Öffnungswinkel bei höchstens 10°, vorzugsweise höchstens 5°, liegen sollte. Mit solchen konischen Grenzflächen zwischen den Schichten können bei einem geringfügigen Auseinanderziehen von Elastomerkörperteilen in Leitungsrichtung Zwischenräume zwischen den Schichten erzeugt werden. Im Rahmen der Materialelastizität führen diese Zwischenräume dann zu einem erweiterten Nachgeben des Eiastomerkörpers bei der Verpressung und können daher zur Feinanpassung an bestimmte Leitungsdimensionen oder auch Laibungsdimensionen dienen, insbesondere wenn die durch die Schichtenfolge vorgegebene Stufung für diese Anpassung zu grob sein sollte und Zwischenwerte gewünscht sind.

Bei dieser Gelegenheit ist anzumerken, dass die Erfindung vor allem die aus dem Stand der Technik bekannte Anpassung an Leitungsdimensionen durch individuelles Entfernen von Schichten von innen beginnend betrifft. Sie richtet sich aber auch auf den komplementären Fall, dass zur Anpassung an ein bestimmtes Laibungsmaß, in das der Elastomerkörper hinein passen soll, von außen beginnend Schichten weggenommen werden. Beide Fälle können natürlich auch kombiniert sein.

Die Elastomerkörperlänge in Leitungsrichtung: sollte durch die Länge der Kammzinken bzw. Schichten relativ weitgehend ausgenutzt werden, so dass also die Verbindungsstege zwischen den Schichten relativ schmal bleiben, insbesondere bevorzugt höchstens 10 %, vorzugsweise 7 % oder 5 %, der Gesamtelastomerkörperlänge betragen. Die Schichten lassen sich damit leicht entfernen, entweder durch Abreißen oder auch durch Wegschneiden. Inbegriffen ist auch ein Entfernen durch einfaches Ausklappen, das insoweit besonders bevorzugt ist, als dann bei einer versehentlichen Fehlanpassung auch wieder Schichten zurückgeführt werden können, ohne dass sie unterdessen lose geworden sind. Die Verbindungen zwischen den Schichten würden dabei gewissermaßen als Gelenk verwendet und die nicht benötigten Schichten in einen Bereich ausgeklappt, in dem sie die Dichtfunktion nicht stören.

Es hat sich ferner bewährt, die Elastomerkörperteile im äußeren Bereich, also in der äußersten Schicht bzw. in einem nicht mehr im Sinne des "ablösbar" oder "herausklappbar" als Schicht zu wertenden Bereichs mittig, also etwa zwischen 20 und 80 % bezogen auf die Eiastornerkörperüesatlänge, aneinander grenzen zu lassen. Damit bleibt den Elastomerkörperteilen im äußeren Bereich, in dem die Schichtdicken in der Regel etwas stärker sind, jeweils eine gewisse Länge in Leitungsrichtung. Dieser Abschnitt des Elastomerkörperteils wirkt stabilisierend und vereinfacht die Handhabung. Wenn diese äußere Grenze außerhalb des erwähnten Bereichs zwischen 20 und 80 % der Elastomerkörpergesamtlänge liegen würde, bliebe für eines der beiden Elastomerkörperteile kaum Materiallänge übrig und könnte dieses, dann im Übrigen weitgehend aus den Zwiebelschalen selbst bestehend, instabiler in der Handhabung sein. Bevorzugtere Untergrenzen liegen bei 30 % und 40 %, bevorzugtere Obergrenzen bei 70 % und 60 %.

Eingangs war bereits davon die Rede, dass die Schichten die Leitung umschließen sollen. Dies schließt nicht aus, dass die Schlichten geöffnet werden können und dazu geschlitzt sind. Eine geschlitzte Ausführung ist vielmehr bevorzugt. Dementsprechend ist ein die Schichten bis in den mittigen Bereich durchdringender und dabei durchgehender Schlitz bevorzugt. Vorzugsweise ist er jeweils nur einfach vorhanden, ist also jede Schicht nur einfach geschlitzt. Die Leitung kann dann durch Aufklappen eingelegt werden und muss nicht durch eine Öffnung in dem Elastomerkörper hindurch gefädelt werden. Insbesondere können damit also auch Leitungen abgedichtet werden, die bereits durch die Wandöffnung geführt sind oder die in anderer Weise ein Durchfädeln erschweren oder nicht erlauben.

Bei einer weiteren bevorzugten Ausgestaltung hat der Elastomerkörper im Außenmantelbereich eine Verdickung seines Querschnitts senkrecht zur Leitungsrichtung, wobei diese Verdickung zwischen 20 und 80 % der Gesamtlänge des Elastomerkörpers in Leitungsrichtung liegt. Diese Verdickung kann zum einen In diesem Bereich eine ausgeprägtere Krafteinwirkung in den Richtungen senkrecht zur Leitungsrichtung zugunsten verbesserter Dichteigenschaften bewirken, gewissermaßen als eingebauter Keil. Dies kann besonders dann gewünscht sein, wenn zumindest in einem Teilbereich entlang der Leitungslänge innerhalb der Leitungsdurchführung entsprechende Anpresskräfte nötig sind, aber nicht Insgesamt der Querschnitt des Elastomerkörpers vergrößert werden soll, um seine Handhabungseigenschaften beim Einsetzen nicht zu stark zu verschlechtern. Darüber hinaus kann die erwähnte Verdickung eine gewisse Sicherung gegen ein unbeabsichtigtes Herausziehen des Elastomerkörpers in Leitungsrichtung bilden, insbesondere wenn eine entsprechende Hohlform zur Aufnahme der Verdickung vorgesehen ist. Diese Hohlform kann auch in einem Elastomerrahmen, also einem weiteren Elastomerteil der Leitungsdurchführung, das den Elastomerkörper umgibt, vorgesehen sein, aber auch in der Wandöffnung selbst.

Die bevorzugte Herstellung durch Spritzguss wurde bereits erwähnt. Grundsätzlich eignet sich die Erfindung für verschiedene Herstellungsverfahren, die gegenüber dem konventionellen Einschneiden von Schlitzen zwischen Schichten vereinfacht sind, insbesondere solche, bei denen eine Form verwendet und mit dem Elastomermaterial gefüllt wird. Besonders bevorzugt sind neben dem Spritzgießen noch das Pressen und Transferpressen. Hierbei wird plastisch verformbares Material mit einer Form gepresst, im Fall des Transferpressens dabei mit einem Extruder zugeführt. In Betracht kommen ferner auch das (drucklose) Gießen, das Schäumen in eine Form, das Extrudieren in eine Form oder das Blasen in eine Form.

In weiterer Ausgestaltung betrifft die Erfindung eine Leitungsdurchführung, bei der Zwischenräume zwischen den Schichten eines Elastomerkörperteils an einer den Schichten entgegengesetzten Stirnfläche des Elastomerkörpertells durch Einkerbungen in besagter Stirnfläche markiert sind.

im Sinn einer Vereinfachung der Herstellung kommt auch eine weitere bevorzugte Ausgestaltung in Betracht, bei der eine gewisse Standardisierung der Elastomerkörperteile für verschiedene Leitungsdurchführungen vorgesehen ist.

Dabei sollen unterschiedliche Leitungsdurchführungen jeweils identische Elastomerkörper enthalten. Die Leitungsdurchführungen können hinsichtlich der Zahl der aufnehmbaren Leitungen-und/oder ihrer Abmessungen verschieden sein. Die enthaltenen Elastomerkörper müsse nicht zwingend vollständig identisch sein, beispielsweise können in einer Leitungsdurchführung für eine Mehrzahl Leitungen Elastomerkörper unterschiedlicher Größe enthalten sein. Es sollen aber in verschiedenen Leitungsdurchführungen hinsichtlich der Elastomerkörperteile Identitäten bestehen, etwa indem für eine vergleichbare Größenklasse von Leitungen derselbe Elastomerkörper verwendet wird. Mit "Elastomerkörper" ist hierbei jedenfalls der Satz aus Elastomerkörperteilen gemeint, der hinsichtlich der Schichtenfolge ein in sich abgeschlossenes System bildet. Diese Elastomerkörper können natürlich weiter außen (bei Zylirldergeometrien radial weiter außen) von anderen Bauteilen aus Elastomerwerkstoffen umgeben sein, etwa zusammengehalten sein, die ebenfalls an der Verpressung Teil haben. Auf diese bezieht sich der Gedanke der Identität oder Teilidentität zwischen Elastomerkörpern nicht.

Ein Aspekt der Erfindung betrifft größere Öffnungen, die eine ganze Zahl von Leitungen mit einzelnen Durchführungen aufnehmen. Konventionell werden in einem Rahmen innerhalb der Wandöffnung je zwei Halbschalen aus einem Elastomer um eine jeweilige Leitung gelegt, die gemeinsam die Leitung vollständig umschließen. Die Wandöffnung wird von einer Seite beginnend mit weiteren Elastomerkörpern, die gegebenenfalls paarweise weitere Leitungen umschließen, teilweise aufgefüllt. In den verbleibenden Teil wird eine Spannvorrichtung, eventuell gemeinsam mit weiteren Füllstücken zum vollständigen Ausfüllen der Wandöffnung, eingesetzt, um die Elastomerkörper und Leitungen in der Wandöffnung mechanisch zu befestigen und abzudichten, indem die bis dahin lose aufeinander gelegten Elastomerkörper senkrecht zur Leitungsrichtung verpresst werden. Der erwähnte Rahmen ist dabei für die Erfindung nicht zwingen.

Bei dieser Ausgestaltung sind die als Mehrzahl vorhandenen Leitungsdurchführungen Module, die jeweils nicht nur eine solche Querschnittsfläche, dass sie gemeinsam zum Dichten in die Durchlassöffnung eingesetzt werden können, und einen erfindungsgemäßen Elastomerkörper zum Aufnehmen der Leitung aufweisen, sondern auch jeweils eine Spannvorrichtung zum individuellen Spannen in Leitungsrichtung und eine Elastomerdichtfläche, die in gespanntem Zustand der Spannvorrichtung auf dem Umfang des Moduls senkrecht zur Leitungsrichtung außen liegt.

Die zugrunde liegende Idee beruht auf Feststellungen der Erfinder, dass die Verpressung Innerhalb der aufgeschichteten Elastomerkörper bei einer Leitungsdurchführung nach dem Stand der Technik mit zunehmendem Abstand zu der Spannvorrichtung abnimmt, mit dem Risiko, dass sich eine unzureichende Dichtwirkung der entfernt liegenden Elastomerkörper einstellt. Dagegen führt eine stärkere Verpressung zu größeren mechanischen Belastungen der nahe zur Spannvorrichtung gelegenen Elastomerkörper und der darin eingeschlossenen Leitungen mit dem Risiko, diese zu beschädigten.

Ferner hat es sich bei der Montage eines solchen Systems nach dem Stand der Technik als nachteilig herausgestellt, dass zuerst alle Leitungen innerhalb der Wandöffnung mit Elastomerkörpern umschlossen werden müssen und die Elastomerkörper dabei so aneinander zu reihen sind, dass sie die Wandöffnung gemeinsam mit der Spannvorrichtung vollständig ausfüllen und erst in einem abschließenden Schritt der Montage, nämlich dem Spannen der Spannvorrichtung, innerhalb der wandöffnung befestigt werden. Dadurch können sie sich während der Montage leicht von ihrer vorgesehenen Position entfernen und insbesondere bei vertikale Leitungsdurchführungen aus der Wandöffnung herausfallen.

Durch eine "dezentrale" Verspannung der leitungsumschließenden Elastomerkörper wird eine bessre Einstellbarkeit und möglichst homogene Druckverteilung für eine gleichmäßige Dichtwirkung, sowie eine bei Bedarf abschnittsweise und damit schrittweise Befestigung innerhalb der Wandöffnung zur Erleichterung der Montage bewirkt.

Das Leitungsdurchführungssystem ist dabei auch für einen Rahmen vorgesehen, der vorzugsweise teilweise oder ganz In die Wandöffnung eingelassen ist, aber auch vor dieser auf der Wand aufgesetzt sein kann. Es ist also (auch) eine Montage des Leitungsdurchführungssystems in einer hier so genannten "Durchlassöffnung" des Rahmens der "Wandöffnung" vorgesehen. Im Folgenden wird mit dem Begriff "Durchlassöffnung" also die Öffnung zur Aufnahme des Leitungsdurchführungssystems des Rahmens bezeichnet, der seinerseits in einer "Wandöffnung" angebracht ist.

Dabei wird insbesondere auf eine zusammenhängende Öffnung abgestellt, also nicht eine Summe aus einer Mehrzahl voneinander getrennter Öffnungen. Solche getrennten Öffnungen kommen im Stand der Technik dann vor, wenn Rahmen durch feste Gitterunterteilungen so aufgeteilt sind, dass sie eine Mehrzahl (jeweils zusammenhängende) Durchlassüffnungen aufweisen, in die dann im Stand der Technik jeweils eine Leitungsdurchführung eingesetzt wird. Die Erfindung richtet sich also bevorzugt auf solche Anwendungsfälle, bei denen die Module tatsächlich direkt aneinander angrenzend, jedenfalls nicht durch Rahmengitterwände oder andere starre Teile voneinander getrennt, eingesetzt werden.

Die Erfindung sieht vor, die Durchiassöffnung mit einer Mehrzahl Module zu verschließen, indem die Module in einer Ebene senkrecht zur Leitungsrichtung innerhalb der Öffnung angeordnet werden. Dazu müssen die Module in die Öffnung passen, d. h. die Querschnittsfläche der zum Verschließen angeordneten Module muss eine Teilfläche der Querschnittsfläche der Durchlassöffnung sein, so dass diese Module gemeinsam zum Dichten in die Durchiassöffnung eingesetzt werden können. Hierzu weisen die Module vorzugsweise eine für eine flächenfüllende Anordnung geeignete Umrissform auf, beispielsweise die Form eines Rechtecks oder eines gleichmäßigen Sechsecks.

Innerhalb der Durchlassöffnung dichten die Module mit der Elastomerkörperdichtfläche, die zumindest in gespanntem Zustand der Spannvorrichtung auf dem Umfang der Module senkrecht zur Leitungsrichtung außen liegt.

Die Befestigung der Module innerhalb der Durchlassöffnung erfolgt mit deren Spannvorrichtungen; indem die Elastomerkörper in Leitungsrichtung verpresst werden und sich in Richtungen senkrecht dazu ausdehnen, so dass die außen liegenden Elastomerkörperdichtflächen nach außen gedrückt werden. Durch diese Ausdehnung können die Module gegen die Laibung der Durchlässöffnung verspannt und somit befestigt werden und dichten dabei gegeneinander, sowie eine in einem Elastomerkörper aufgenommene Leitung.

Die Ausdehnung der Module senkrecht zur Leitungsrichtung beim Spannen der Spannvorrichtung ermöglicht, eine einzelne Reihe von Modulen innerhalb der Durchlassöffnung zu befestigen, sobald die Reihe von einer Wand zu einer gegenüberliegenden Wand der Öffnung reicht. Insbesondere erlaubt dies die Befestigung eines Teils der Module, schon bevor die Gesamtheit der für die Leitungsdurchführung benötigten Module in die Durchlassöffnung eingebracht ist.

Weiterhin ist denkbar, wenngleich nicht bevorzugt, dass die erfindungsgemäßen Module gemeinsam mit weiteren Modulen ohne Spannvorrichtung eingesetzt werden, wobei in diesem Fall mindestens ein erfindungsgemäßes Modul in jeder Reihe enthalten sein sollte, um diese in der Durchlassöffnung zu befestigen. Im Sinne der Erfindung können Zwischenräume, die nicht durch die Ausdehnung der Module beim Verpressen überbrückbar sind, mit Füllstücken, vorzugsweise aus Elastomeren, belegt werden.

Wie oben bereits geschildert, wird der Elastomerkörper mit der Spannvorrichtung in Leitungsrichtung verpresst, um durch eine Ausdehnung in Richtungen senkrecht dazu zu dichten und die Module in der Durchlassöffnung zu befestigen. Bevorzugt weist die Spannvorrichtung dazu Auflageflächen auf den beidseitigen Stirnseiten des Elastomerkörpers in Leitungsrichtung auf, die die Spannkraft in Leitungsrichtung übertragen. Vorzugsweise umranden diese Auflageflächen die Stirnseiten für eine gleichmäßige Kraftübertragung vollständig. Dies gilt - wie alle im Folgenden beschriebenen Ausgestaltungen - auch unabhängig von dem obigen Modulaufbau aber besonders für diesen.

In einer bevorzugten Ausführung wird die Spannvorrichtung im verschlossenen Zustand durch das Umschließen des Elastomerkörpers an diesem befestigt und kann ihn dabei zusammenhalten, wenn er geschlitzt oder mehrteilig ist. Die Spannvorrichtung umfasst hierzu den Elastomerkörper quasi wie ein Band an seinem Umfang senkrecht zur Leitungsrichtung, bedeckt diese Umfangsfläche jedoch nicht vollständig, um die Ausdehnung des Eiastomerkörpers senkrecht zur Leitungsrichtung zu gewährleisten.

Die Spannvorrichtung kann zum Umschließen einen ersten Schenkel auf der Umfangsfläche und zum Verpressen je einen zweiten Schenkel auf den Stirnseiten des Elastomerkörpers aufweisen. Damit weisen Elastomerkörper und Spannvorrichtung ein Profil auf, das durch Förmschluss der beiden ein Herausziehen des Elastomerkörpers bei geschlossener Spannvorrichtung in Leitungsrichtung verhindert, etwa bei Zug auf der Leitung.

Die Spannvorrichtung weist bevorzugt einen Verschluss zum Einlegen oder Entnehmen der Leitung auf, so dass die Spannvorrichtung abgenommen werden kann, beispielsweise um diese zu prüfen, zu reparieren oder zu ersetzen, ohne dass hierzu der Elastomerkörper von der Leitung entfernt werden oder sogar die Leitung aus der Wandöffnung herausgenommen werden müsste, und ferner bei geschlitzten oder infolge Mehrteiligkeit abnehmbaren Elastomerkörpern die Leitungsdurchführung oder das Modul zudem zum Dichten einer bereits in der Dürchlassöffnung verlegten Leitung nutzbar ist.

Eine bevorzugte Ausführung des Verschlusses weist einen Spannbolzen, bevorzugt eine Schraube, auf, der das Öffnen der Spannvorrichtung ermöglicht und diese zum Spannen wieder verschließen kann. Beim Öffnen der Spannvorrichtung wird bevorzugt ein weiterer Spannbolzen zum Spannen in Leitungsrichtung, vorzugsweise eine Schraube, als Gelenkachse zum Aufklappen der Spannvorrichtung senkrecht zur Leitungsrichtung für das Einlegen oder Entnehmen einer Leitung verwendet. Als Material der Spannvorrichtung wird für die Übertragung der Spannkräfte ein Metall oder ein glasfaserverstärkter Kunststoff bevorzugt.

Die Leitungsdurchführung weist bevorzugt eine in Leitungsrichtung sichtbare Farbmarkierung auf. Dabei ist denkbar, dass die Farbmarkierung beispielsweise eine Information über den Durchmesser oder die Art der Leitung, für deren Aufnahme die Leitungsdurchführung geeignet ist, wiedergibt.

Zur Verteilung der Anpresskraft der Spannvorrichtung weisen die Leitungsdurchführungen vorzugsweise beidseitig des Elastömerkörpers bzw. der Elastomerkorperteile Pressplatten aus einem festen Material, beispielsweise Metall oder glasfaserverstärkter Kunststoff, auf. Dadurch wird sichergestellt, dass der zum Dichten notwendige Anpressdruck der Spannvorrichtung auf einen größeren Teil der Stirnfläche des Elastomerkörpers übertragen wird. In einer möglichen Ausführung ist jeweils beidseitig in Leitungsrichtung eine Pressplatte fest mit dem Elastomerkörper verbunden. Bei der Verwendung der Pressplatten übt die Spannvorrichtung eine Kraft in Leitungsrichtung direkt auf diese Platten aus, wobei die Platten, gegebenenfalls mit den befestigen Elastornerkörpem, durch Formschluss mit der Spannvorrichtung gehalten werden können.

Ferner sind der Elastomerkörper bzw. die Elastomerkörperteile zur Aufnahme einer oder einer Mehrzahl von Leitungen vorzugsweise bei geöffneter Spannvorrichtung entnehmbar und gegen andere austauschbar, so dass die Leitungsdurchführung oder ein Modul sowohl bezüglich der Anzahl, als auch bezüglich der Art und des Durchmessers der aufzunehmenden Leitungen anpassbar ist.

Bei einer günstige Ausgestaltung zeichnet sich eine erfindungsgemäße Leitungsdurchführung insbesondere dadurch aus, dass sie außerhalb der Durählassöffnung eine Leitung aufnehmen kann und an dieser durch Schließen des Verschlusses der Spannvorrichtung fixiert wird. Besonders bei Durchführungen (einschl. Systemen aus Modulen) mit einer Mehrzahl von Leitungen ist es von Vorteil, dass so die dichtenden Elastomerkörper relativ zu den Leitungen individuell vorfixiert werden können. Zusätzlich zu der oben dargestellten dezentralen Verspannung der Module innerhalb der Durchlassöffnung ermöglicht die Erfindung also weitere Vorteile gegenüber dem Stand der Technik, beispielsweise wird das Herausfallen der Elastomerkörper aus der Durchlassöffnung während der Montage auch ohne aufwändiges Verkeilen oder Verspannen mit Hilfsspindeln verhindert, bei der Abdichtung kann eine gleichmäßige Druckverteilung auf die Dichtflächen erzielt werden und es können sogar einzelne Module aus einem fertig aufgebauten Leitungsdurchführungssystem gelöst werden, um beispielsweise eine zusätzliche Leitung aufzunehmen oder eine bestehende Leitung auszutauschen, ohne weitere Leitungsabdichtungen zu öffnen oder sogar einen Großteil der Leitungsdurchführung innerhalb der Durchlassöffnung abbauen oder neu aufbauen zu müssen.

Im Folgenden wird die Erfindung anhand von Ausführungsbeispielen näher erläutert, wobei die dabei offenbarten Merkmale auch in anderer Kombinationen erfindungswesentlich sein können und sich, wie bereits erwähnt, implizit auf alle Kategorien der Erfindung beziehen.

Dabei zeigt:
- Figur 1: eine erste einfache Ausführungsform der Erfindung, und zwar eine Frontansicht in Leitungsrichtung, rechts daneben im Schnitt mit horizon- tal in der Zeichenebene liegender Leitungsrichtung und unten in Drauf- sicht mit vertikal in der Zeichenebene liegender Leitungsrichtung.
- Figur 2-6, 8: jeweils weitere komplexere Ausführungsbeispiele in analoger Darstel- lung. Figur 7 eine Leitungsdurchführung, die nicht Teil der Erfindung ist
- Figur 9: eine Draufsicht und eine Seitenansicht eines erfindungsgemäßen Mo- duls,
- Figur 10: eine Draufsicht und eine Seitenansicht von Elastomerteilen aus Figur 9 mit daran befestigten Pressplatten,
- Figur 11: eine Draufsicht und eine Seitenansicht eines erfindungsgemäßen Lei- tungsdurchführungssystems mit vier Modulen in einem Rahmen und
- Figur 12: eine Draufsicht und eine Seitenansicht auf einen Rahmen mit vier Durchlassöffnungen für jeweils vier Module.

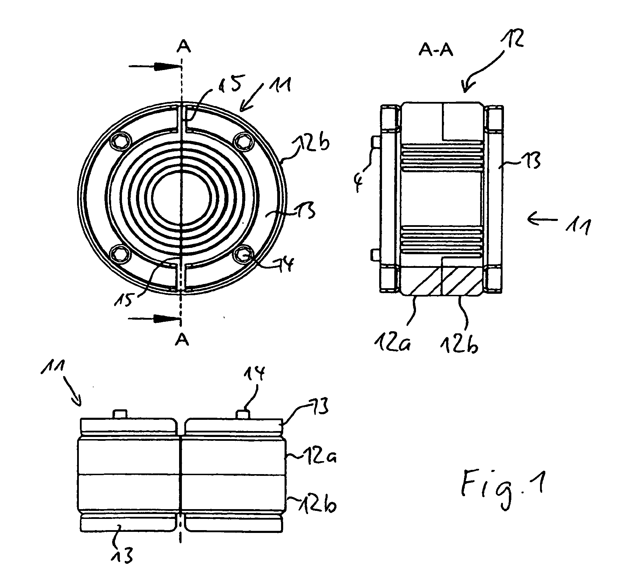

Figur 1 zeigt links oben ein erfindungsgemäßes Ausführungsbeispiel, das für eine einzige zentral anzuordnende Leitung vorgesehen ist. Die Leitungsdurchführung 11 besteht aus einem Elastomerkörper 12 mit zwei Elastomerkörperteilen 12a und 12b und einer Spannvorrichtung aus vier halbkreisförmigen U-Profilblechen oder Pressplatten 13 und vier Spannbolzen in Form von Schrauben 14.

Die grundsätzliche Geometrie ist ersichtlich zylindrisch, wobei die Mittenachse der nicht gezeichneten Leitung die Zylinderachse bildet. Diesbezüglich und hinsichtlich der Ausgestaltung der Spannvorrichtung 13, 14 entspricht das Ausführungsbeispiel dem Stand der Technik, lediglich die Ausbildung des Elastomerkörpers 12 weicht davon ab. Im Unterschied zum Stand der Technik weisen nämlich die beiden Elastomerkörperteile 12a, b miteinander verschachtelte oder verzahnte und schichtenartig aufeinander folgende Hohlzylinder auf, die in der Schnittdarstellung A-A rechts oben zu erkennen sind. Sie stellen sich in diesem Schnitt wie Kammzinken dar, wobei die Schichten des linken Elastomerkörperteils 12a links durch radial verlaufende Stege verbunden sind und die des rechten Elastomerkörperteils 12b rechts. Die Schichten sind der Übersichtlichkeit halber nicht einzeln mit Bezugszeichen versehen, aber im Schnitt gut zu erkennen. Man beachte, dass die Kreise in der Frontansicht links oben (und in den folgenden Figuren) nicht die Grenzen zwischen diesen Schichten bezeichnen, sondern Einkerbungen der Verbindungsstege, hier in der Außenseite des Elastomerkörpeßeils 12b. Diese Einkerbungen sind in der Schnittdarstellung rechts oben als kleine horizontale Striche markiert und bilden Dünnstellen der Wände, aber keine Unterbrechungen.

Beide Elastomerkörperteile bilden im radial äußeren Bereich axial betrachtet die Hälfte dieses Elastomerkörpers; im radial innersten Bereich ist ein zylindrischer Block vorgesehen, der den mittigen Teil des ersten Elastomrkörperteils 12a bildet. Dieser Block ist beim Einsetzen einer Leitung jedenfalls zu entfernen und dient dazu, eine Wandöffnung auch ohne Leitung dicht verschließen zu können. Er muss durch Abreißen oder Abschneiden entfernt werden.

Im Unterschied dazu können die auf diesem Block radial nach außen folgenden Schichten an den erwähnten Dünnstellen nicht nur abgerissen oder abgeschnitten werden, vielmehr ist es wegen der radialen Länge der Verbindungsstege möglich und genügt es, sie nach außen umzuklappen. Sie liegen dann bezogen auf die Schnittdarstellung (rechts oben) links bzw. rechts von dem in der Darstellung von dem Elastomerkörper 12 eingenommenen Bereich. In der an sich bekannten Weise kann damit eine Dimensionsanpassung an die durchzuführende Leitung vorgenommen werden. Wenn dabei ein Fehler geschehen ist, lassen sich die Schichten aber auch wieder zurückklappen. Es besteht nicht die Gefahr, dass die Schichten verloren gehen, nachdem sie entfernt wurden, oder beim Wiedereinsetzen undicht sind, weil sie im Schmutz gelegen haben, oder geometrisch unpräzise wiedereingesetzt werden. Vielmehr sorgt die durch die Verbindungsstege und Dünnstellen vorgegebene Klappmechanik für eine passgenaue Wiederpositionierung.

Wenn die Leitung tatsächlich eingelegt werden soll, kann ein durch die Schraffur im unteren Bereich (etwa im unteren Sechstel) der Schnittdorstellung (rechts oben) erkennbarer Schlitz 15 durch die Elastomerkörpeneile 12a, b genutzt werden. Dieser Schlitz 15 ist auch in der Frontansicht links oben durch eine vertikale durchgezogene Linie erkennbar. Der untere gestrichelte Bereich, der der Schraffur im Schnitt rechts entspricht, ist nicht geschlitzt. Dieser dient dazu, die Elastomerkörperteile 12a, b aufbiegen zu können. Zu dem gleichen Zweck sind die U-Profilpressplatten 13 in Halbkreisringe geteilt.

Die Elastomerkörperteile 12a, b können als zwei Elastomerspritzgussteile produziert werden, weit die Abstände zwischen den jeweils zu einem gemeinsamen Elastomerkörperteile gehörenden Schichten ausreichend groß sind. Aufwändige Schneidevorgänge entfallen weitgehend, nämlich mit Ausnahme des Schlitzes 15, der wegen der geraden Form diesbezüglich weniger problematisch ist. Dann können die Elastomerkörperteile 12a, b zusammengeschoben werden und mit der Spannvorrichtung 13. 14 versehen werden. Dazu müssen lediglich die U-Profilpressplatten 13 aufgelegt und die Spannschrauben 14 durchgeschoben werden und in ein entsprechendes Gewinde der Pressplatte 13 auf der entgegengesetzten Seite eingeschraubt werden.

Vor Ort auf der Baustelle kann dann der Handwerker die Leitungsdurchführung öffnen, entsprechend der durchzuführenden Leitung durch Entnahme nicht nur des mittigen Blocks, sondern auch durch Ausklappen einer entsprechenden Zahl von Schichten anpassen, dann die Leitung einlegen bzw. die Leitungsdurchführung um die Leitung herum legen, in die Laibung einer Wandöffnung, etwa einer Kernbohrung in einer Betonwand, einschieben und dort mittels der Spannschrauben 14 festziehen.

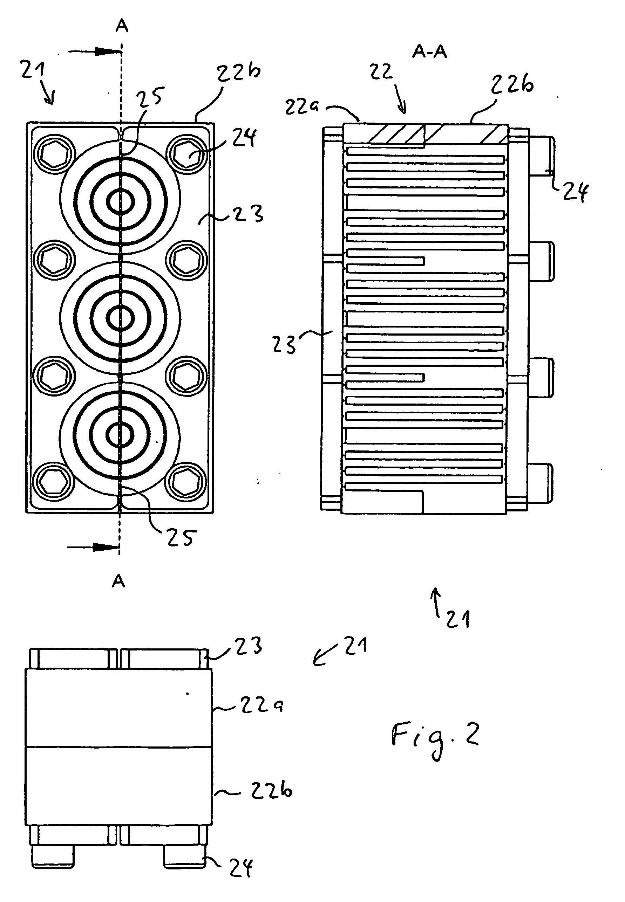

Figur 2 zeigt ein zweites Ausführungsbeispiel 21 in analogen Darstellungen wie in Figur 1. Entsprechende Teile sind hier mit um 10 erhöhten Bezugszeichen versehen.

Im Unterschied zu dem ersten Ausführungsbeispiel ist hier die Aufnahme bis zu dreier Leitungen vorgesehen, wie sich aus der Frontansicht (links oben) leicht entnehmen lässt.

Die dreifach vorgesehene Schichtenfolge entspricht jeweils qualitativ dem ersten Ausführungsbeispiel aus Figur 1, wobei drei, jeweils für sich zylindersymmetrische schichtenfolgen linear versetzt nebeneinander angeordnet sind. Dennoch ist der gesamte Elastomerkörper 22 aus lediglich zwei Elatomerkörperteilen 22a, b aufgebaut, wobei ein zum ersten Ausführungsbeispiel analoger Schlitz 25 in diesem Fall alle drei Schichtenfolgen durchdringt und lediglich einen in der Figur oben angeordneten schraffierten Verbindungssteg stehen lässt.

Hier sind die Pressplatten 23 in einem verallgemeinerten Sinn ebenfalls als U-Profile ausgeführt, allerdings nicht in einer einfachen Halbkreisringgeometrie, sondern gewissermaßen jeweils als Hälfte des der Gesamtgeometrie des Elastomerkörpers 22 entsprechenden Rechtecks (in Frontansicht) abzüglich der kreisrunden Ausschnitte für die Schichtenfolgen. Aufgrund der rechteckigen Geometrie eignet sich dieses Ausführungsbeispiel besonders für mit einem Rahmen versehene Wandöffnungen und weniger für Bohrungen.

Für Herstellung und Anwendung gelten analoge Ausführungen, wobei hier natürlich auch die Belegung von nur einer oder nur zwei Schichtenfolgen durch eine Leitung möglich ist, und im Übrigen auch verschieden große Leitungen eingelegt werden können, weil sich die Schichtenfolgen individuell anpassen lassen.

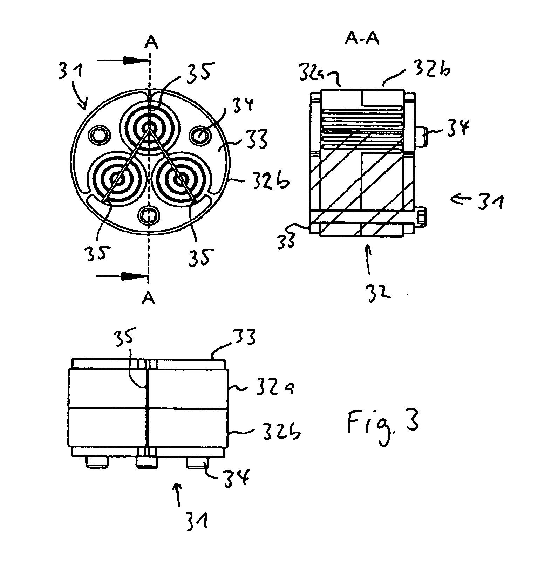

Das dritte Ausführungsbeispiel 31 in Figur 3 ähnelt dem aus Figur 2 dahingehend, dass es wieder eine Erweiterung des Basisausführungsbeisplels aus Figur 1 für drei Leitungen darstellt. Hier ist allerdings die Anordnung der drei Schichtenfolgen nicht linear, sondern im gleichseitigen Dreieck, was an eine im Unterschied zum zweiten Ausführungsbeispiel nicht rechteckige, sondern kreisrunde Wandöffnung besser angepasst ist. Damit eignet sich dieses Ausführungsbeispiel besser für Kernbohrungen (wie das erste Ausführungsbeispiel).

Wieder sind die entsprechenden Teile gegenüber Figur 2 mit um 10 erhöhten Bezugszeichen versehen. Dementsprechend treten hier sechs wieder in einem verallgemeineren Sinn U-profilartige Pressplatten 33 auf. Da die Schichtenfolgen nicht linear angeordnet sind, ist der Schlitz 35 hier (in Figur 3 links oben umgekehrt) Y-förmig. Die Pressplatten 33 sind so aufgeteilt, dass sie einem ab der Mitte der in Figur 3 oberen Schichtenfolge (die in Figur 3 rechts oben im Schnitt dargestellt ist) zweiteiligen Aufklappen nicht im Wege steht.

Im Übrigen gelten die gleichen Ausführungen wie zu den vorherigen Ausführungsbeispielen.

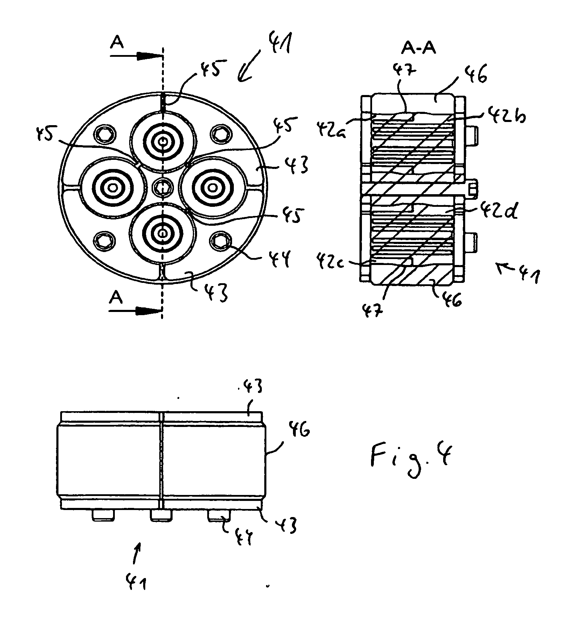

Figur 4 zeigt ein viertes Ausführungsbeispiel 41, wieder mit um 10 erhöhten Bezugszeichen, das zunächst eine Erweiterung des dritten Ausführungsbeispiels auf bis zu vier Leitungen darstellt. Dementsprechend sind wieder In einer kreisrundzylindrischen Grundgeometrie vier Schichtenfolgen quadratisch angeordnet. Insoweit gelten die Ausführungen zu den Figuren 1,2 und 3.

Im Unterschied dazu sind aber hier nicht nur zwei Elastomerkörperteile vorgesehen. Vielmehr besteht jede Schichtenfolge aus zwei Elastomerkörperteilen, von denen die in Figur 4 rechts oben dargestellten mit 42a - d bezeichnet sind: Insgesamt handelt es sich damit also um acht Elastomerkörperteile der Schichtenfolgen. Diese sind gehalten in und umgeben von einem Elastomerrahmen 46, der hier der Übersichtlichkeit halber nicht als Elastomerkörper oder Elastomerkörperteil bezeichnet wird, letztlich aber aus dem gleichen Elastomermaterial besteht. Er enthält selbst nämlich keine Schichtenfolgen und stellt die Formanpassung zwischen diesen und dem Außenumriss der Leitungsdurchführung her. Allerdings ist er an in Figur 4 links oben in der Frontansicht mit 45 bezeichneten Stellen geschlitzt und damit insgesamt einteilig, Jedoch so aufklappbar, dass alle Elastomerkörperteile 42a - d (und natürlich die nicht gezeigten und bezifferten) entnommen werden können.

Einen weiteren Unterschied zu den ernsten drei Ausführungsbeispielen stellen die an den Außenmantelflächen der Elastomerkörperteile 42a - d axial mittig vorgesehenen radialen Verdickungen dar, die in Figur 4 rechts oben mit 47 bezeichnet sind. Diese verdickungen 47 greifen in entsprechende konkave Ausnehmungen in dem äußeren Elastomerrahmen 46 ein und sichern damit die Elastomerkörperteile 42a, b gegen ein axiales Herausziehen. Man kann sich leicht vorstellen, dass au entsprechenden Verdickungen die lokale Krafteinwirkung senkrecht zur Leitungsrichtung verstärkt würde, wenn auf die konkave Ausnehmung verzichtet würde. Dies würde sowohl für eine Kombination mit dem Elastomerrahmen (dann ohne Ausnehmung) als auch für einen Einbau in eine Wandöffnung ohne' weiteren Elastomerrahmen, also entsprechend Figuren 1 - 3, gelten. Wenn auf die Verdickungen und die entsprechenden konischen Ausnehmungen verzichted wird, können die Elastomerkörperteile leichter mit der Leitung in Leitungsrichtung heraus geschoben werden, sodass dann auch auf eine Schlitzung des Elastomerrahmens 46 verzichtet werden könnte.

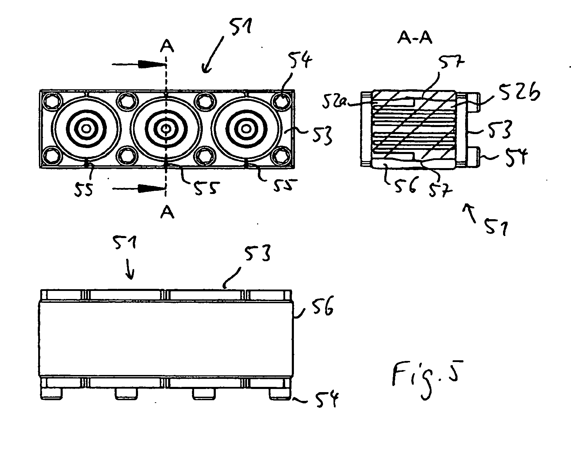

Figur 5 zeigt ein Ausführungsbeispiel, dass hinsichtlich der rechteckigen Grundgeometrie Figur 2 entspricht, aber hinsichtlich des Aufbaus der Elastomerteile Figur 4. Der Vergleich der Figuren 4 und 5 zeigt einen wichtigen Vorteil der dort vorgenommenen Trennung zwischen den Elastomerkörperteilen 42a - d und, in Figur 5, 52a, b und dem Rahmen 46 und, in Figur 5, 56, nämlich dass Erstere standardisiert werden können. Tatsächlich sind die Elastomerkörperteile 42a, c und 52a untereinander zumindest hinsichtlich der Spritzgussform identisch genauso wie die Elastomerkörperteile 42b, d und 52b. Sie können damit zu Schirhtfolgeneinheiten zusammengesteckt werden, die in unterschiedlichen Anordnungen und Zahlen zu Leitungsdurchführungen kombiniert werden können, etwa zu viert wie in Figur 4 und zu dritt wie in Figur 5. Mit dem Rahmen 46 bzw. 56 lässt sich dann eine Anpassung an die jeweiligen Außenmaße der Leitungsdumhführung und die Anordnung der Schichtfolgeneinheiten darin herstellen.

In Figur 5 ist der Außenrahmen übrigens an den mit 55 bezeichneten Stellen geschlitzt, nämlich in Figur 5 links oben jeweils unter den zylindrischen Schichtfolgeneinheiten, wie in der Schraffur in Figur 5 rechts oben berücksichtigt. Damit lassen sich die Elastomemahmen aufklappen, um die Schichtfolgen 52, b, zu erreichen.

Letztere können wie in Figur 3 geschlitzt sein, wobei in diesem Fall ein Schnitt von außen bis zur Zylinderachse genügt. Die Schlitzung ist allerdings nicht notwendig wenn in Kauf genommen wird, dass die Leitung durchgefädelt werden muss. In Figur 5 ist daher kein Schlitz eingezeichnet.

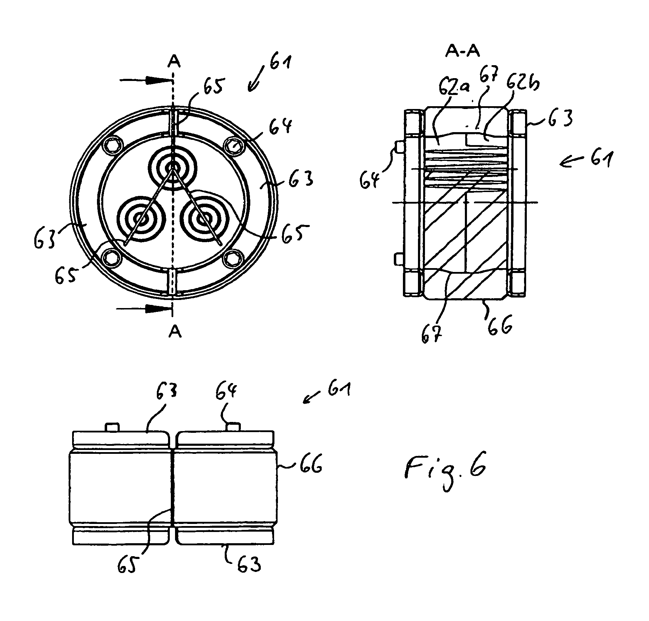

Figur 6 zeigt ein sechstes Ausführungsbeispiel, das hinsichtlich der Grundgeometrie Figur 3 entspricht, aber hinsichtlich der Trennung der Elastomerteile den Figuren 4 und 5. Daher kann auf die entsprechenden Erläuterungen verwiesen werden.

Eine weitere Besonderheit des Ausführungsbeispiels aus Figur 6, die in dieser Form auch bei den anderen Ausführungsbeispielen realisierbar ist, liegt darin, dass die Schichten jeweils konisch sind, wie die Schnittdarstellung rechts oben in Figur 6 zeigt. Der halbe Öffnungswinkel des der konischen Fläche entsprechenden Kegels beträgt hier etwa 2°.

Man kann sich anhand Figur 6 leicht vorstellen, dass nach dem Entfernen einer gewissen Zahl von Schichten möglicherweise ein innenmaß erreicht wird, das immer noch etwas zu gering für die gewünschte Leitung ist, wobei aber das Entfernen einer weiteren Schicht wegen dann zu großen Innenmaßes oder zu geringen Anpressdrucks vermieden werden soll. In diesem Fall können die beiden Elastomerkörpertelle 62a, b axial etwas auseinander gezogen werden, womit sich zwischen den Schichten Zwischenräume ergeben, die sich beim Verpressen infolge der elastischen Verformung zu einem geringeren Anpressdruck auf die Leitung addieren bzw. die schon zuvor das einfache Durchführen oder Einlegen einer entsprechend etwas zu großen Leitung erlauben.

Die Tatsache, dass der innere Hohlraum für die Leitung in unverformtem Zustand ebenfalls eine konische Mantelfläche hat, stört infolge der Elastizität des Materials nicht.

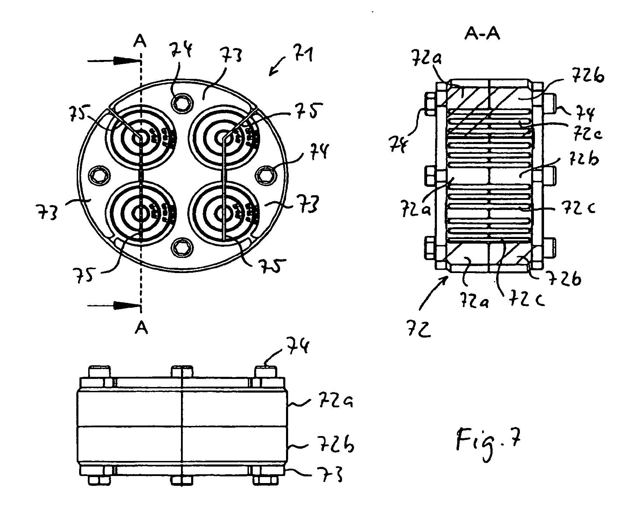

Figur 7 zeigt eine nicht zur Erfindung gehörende Leitungsdurchführung, wieder sind die Bezugsziffern um 10 erhöht Diese Variante lässt sich ausgehend von Figur 3 erläutern. Zunächst sind im Unterschied zu Figur 3 hier nicht drei im gleichseitigen Dreieck sondern vier im Quadrat angeordnete jeweils zylindrische Schichtenfolgen vorgesehen. Anstelle des umgekehrt Y-förmigen Schlitzes 35 in Figur 3 existieren hier zwei jeweils gewinkelte Schlitze 75, die in der Frontansicht in Figur 7 links oben jeweils unter 45° entlang der kürzesten Strecke von außen zu dem jeweiligen Zentrum der beiden oberen Schichtenfolgen laufen und dort senkrecht nach unten abknicken. Sie erreichen gerade die unterste Schicht der unteren Schichtenfolgen und enden dort. Die Pressplatten 73 sind dementsprechend in drei Teile aufgeteilt, wie in der Figur ersichtlich. Damit lässt sich auch diese Leitungsdurchführung zum Einlegen von Leistungen in alle vier Schichtenfolgen aufklappen.

Ferner existieren wieder zwei jeweils über die gesamte Querschnittsfläche der Leitungsdurchfühning senkrecht zur Leitungsrichtung durchgehende Elastomerkörperteile 72a, b. Eine Besonderheit besteht darin, dass die beiden Elastomerkörperteile 72a, b nicht ineinander greifen sondern zwischen ihren jeweiligen Schichten Zwischenräume für separate und voneinander getrennte weitere Schichten bilden, die hier alle mit 72c bezeichnet sind und die jeweils eine Hohlzylinderform haben. Pro Schichtenfolge existieren davon drei, insgesamt also zwölf.

Insbesondere lassen sich diese hohlzylindrischen Schichten 72c durchaus auch spritzgusstechnisch herstellen. Durch die Erhöhung der Zahl der Einzelteile sind sie allerdings nicht besonders bevorzugt.

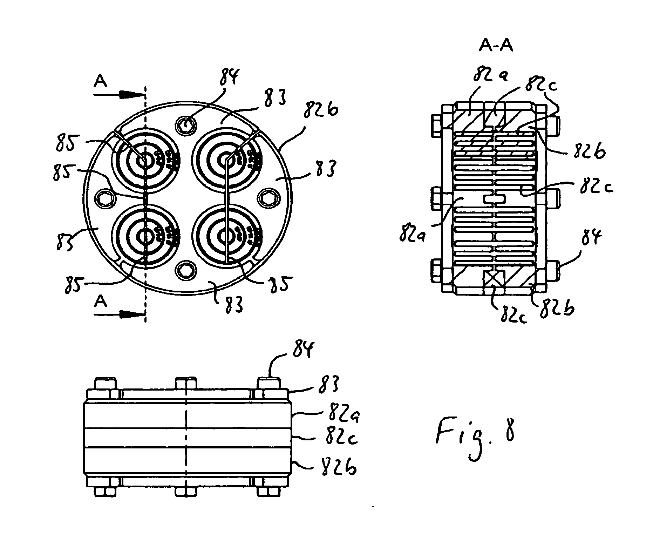

Figur 8 entspricht zunächst weitgehend Figur 7. Im Unterschied dazu sind hier aber die in Figur 7 einzelnen Schichten 72c als dritter zusammenhängender Elastomerkörperteil 82c ausgeführt. Dazu ist eine einzelne Verbindungsstege zusammenfassende zentrale Elastomerschicht vorgesehen, die eine zu der Leitung senkrechte Kreisscheibe bildet und außen einen verdickten Rand hat. Diese ist einstückig mit den Schichten. In dem eingangs verwendeten Bild der Kämme ausgedrückt bedeutet das, dass in der Schnittdarstellung in der Figur 8 rechts oben von links ein Kamm mit nach rechts gerichteten Zinken und von rechts ein Kamm mit nach links gerichteten Zinken in einen mittig vorgesehenen Kamm mit nach beiden Seiten gerichteten Zinken eingreifen.

Dieses Ausführungsbeispiel dient zum einen zur Veranschaulichung der Allgemeinheit des Erfindungsgedankens. Zum anderen kann es besonders attraktiv sein, wenn in der Leitungsdurchführung eine die Querschnittsfläche senkrecht zur Leitungsrichtung im Wesentlichen ausfüllende Funktionsschicht vorgesehen sein soll, etwa als EMV-Schutz, in Zusammenhang mit Brandschutzmaßnahmen oder auch für spezielle Anwendungen wie etwa als Röntgenschutz. In solchen Fällen kann der Elastomerwerkstoff mit Zusätzen versehen sein, die seiner Leitfähigkeit oder seinen Absorptionsvermögen, der Brandhemmung oder anderen Zwecken dienen. Häufig werden solche Zusätze die Verformungs- und Dichteigenschaften etwas verschlechtern. Dann ist es günstig, wenn der entsprechende, hier mittige Elastomerkörperteil beidseits von Elastomerkörperteilen mit besseren elastischen Eigenschaften eingefasst wird.

Beispielhafte Zusätze sind metallische oder halbleitende Partikel wie etwa Aluminium, Kupfer, Silizium oder auch Kohlenstoff, die in einer Elastomermatrix dispergiert sind, und diese leitfähig machen. Günstigerweise wird eine solche Schicht dann geerdet, insbesondere über eine ohnehin vorgesehene Schraube der Leitungsdurchführung, und dient dann als EMV-Schutz. Geeignete Zusätze zum Brandschutz sind Volumenbildner und Treibmittel, die unter dem Einfluss von Hitze erheblich ihr Volumen vergrößern, beispielsweise Ammonium- oder Melaminpolyphosphat.

Zur Röntgenabschirmung können Schwermetalloxide oder -Verbindungen wie Bleioxid oder Bleisulfat, Bariumoxid oder Bariumsulfat und ähnliche eingesetzt werden.

Das dritte Elastomerkörpertell 82c ist im radial äußeren Bereich verdickt, nimmt also eine größere Länge in Leitungsrichtung ein. Diese Verdickung kann die Handhabungseigenschaften verbessem, weil sie einen vergleichsweise massiven Abschnitt des dritten Elästomerkerperfeils 82c bildet. Sie kann auch in Form bestimmter Materialien verwendet werden, und zwar gelartiger oder quellfähiger Materialien, die Heterogenitäten an der Wandöffnung sicher abdichten können, indem sie sich besonders gut an die Wand anlegen. Die Kombination solcher Materialien mit den durch die Verpressung angedrückteh Elastomeren kann hinsichtlich der Dichteigenschaften besonders günstig sein. Dies gilt natürlich völlig unabhängig von den obigen Erläuterungen zu Zusatzfunktionen der Schicht als EMV-Schutz, Röntgenschutz oder Brandschutzschicht.

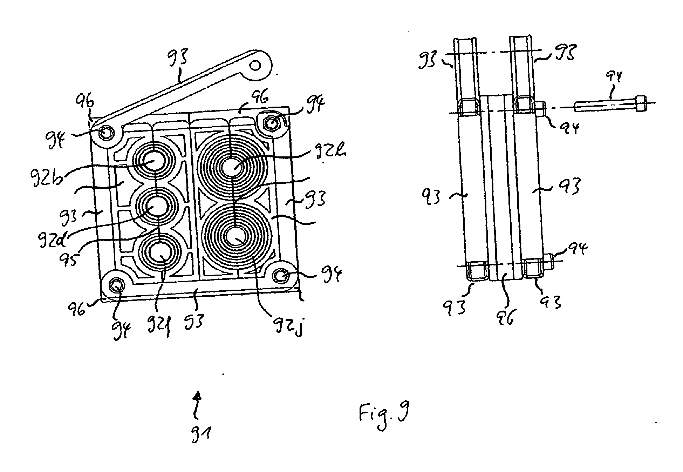

Die folgenden Figuren 9 - 12 zeigen nicht nur eine weitere Ausführungsform einer erfindungsgemäßen Leitungsdurchführung, sondern auch die Verwendbarkeit solcher Leitungsdurchführungen als Module für ein Leitungsdurchtührungssystem.

Figur 9 zeigt links eine Draufsicht in Leitungsrichtung eines quadratischen Moduls 91 eines erfindungsgemäßen Leitungsdurchführungssystems 92 zur Aufnahme von fünf Leitungen mit einer geöffneten Spannvorrichtung 93, 93', 94. Rechts ist eine Seitenansicht in einer Richtung senkrecht dazu dargestellt.

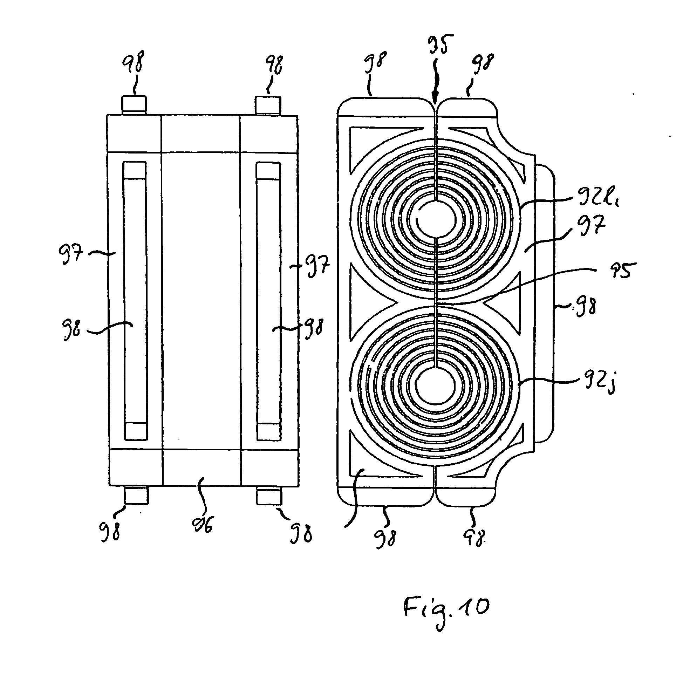

Der Elastomerkörper im Sinn der Schichtenfolgen ist in zehn Elastomerkörperteile unterteilt, von denen die vorderen 92b, d, f, h, j gezeigt sind und die den Figuren 4,5 oder auch 6 entsprechen können. Ein Elastomerrahmen 96, der die Elastomerkörperteile 92b - j umschließt, bildet eine auf dem gesamten Umfang des Moduls 91 senkrecht zur Leitungsrichtung auch in nicht gespanntem Zustand der Spannvorrichtung 93. 93', 94 außen liegende Dichtfläche, wie auch die bisherigen Ausführungsbeispiele. Weiterhin ist er, in der Figur 9 oben, mit einem Schlitz 95 zum Öffnen senkrecht zur Leitungsrichtung versehen. Er ist in Figur 10 zum Vergleich weggelassen. Die Elastomerkörperteile 92b - j sind zur Aufnahme von insgesamt fünf Leitungen ausgelegt und werden weiter unten anhand Figur 10 zusammen mit dem Elastomerrahmen 96 detaillierter beschrieben.

Die Spannvorrichtung weist auf beiden Seiten in Leitungsrichtung je zwei, in Figur 9 oben und unten liegende U-Profile 93 aus Stahl und je zwei vertikale Verbindungsstücke 93' an der linken und rechten Seite des Moduls 91 aus glasfaserverstärktem Kunststoff auf mit jeweils an ihren Enden einer Vorrichtung zur Aufnahme einer Schraube 94 als Spannbolzen. Eine der Schrauben 94 dient als Verschluss und eine benachbarte als Gelenk zum Öffnen des Moduls 91 und Herausnehmen der Elastomerkörperteile 92b - j zur Leitungsaufnahme. In der Darstellung ist die als Verschluss dienende Schraube 94 zum Öffnen der Spannvorrichtung aus dieser hervorgezogen. Die Seitenansicht rechts in Figur 9 verdeutlicht den Aufbau des Moduls 91 in Leitungsrichtung, bezüglich der die Spannvorrichtung 93, 93', 94 beidseitig außen liegt. Dazwischen sind die Elastamerkörperteile 92b - j im dem Rahmen 96 eingeschlossen.

Figur 10 zeigt in der rechten Hälfte eine Draufsicht auf die rechte Hälfte der Elastomerteile aus Figur 9; links ist eine Seitenansicht in einer Richtung senkrecht dazu dargestellt. Die linke Hälfte zur Aufnahme von drei Leitungen ist analog aufgebaut, so dass die folgende Beschreibung auch für diesen und prinzipiell auch für weitere Elastomerkörperteile mit anderen Leitungskonflgurationen gilt.

Grundsätzlich liegt hier ein Aufbau mit einer zylindrischen Konfiguration der Elastomerkörperteile 92h, j (und der nicht dargestellten komplementären Teile) und einem den Zwischenraum zu der Außenkontur des Querschnitts (senkrecht zur Leitungsrichtung) der Leitungsdurchführung bzw. des Moduls 91 bildenden Rahmen, hier 96, aus demselben Elastomermaterial vor. Der Rahmen 96 ist hier überdies in zwei Hälften aufgeteilt, die jeweils entsprechende zylindrische Ausnehmungen und eine rechteckige Außenkontur mit zusätzlich kleinen viertelkreisförmigen Ausnehmungen an den Ecken für die Spannschrauben 94 aufweisen. Die Hälften können zusätzlich mehrteilig sein, wenn sich dies etwa aus Herstellungsgründen anbietet. Die Elastomerkörperteile 92h und kann man sich, wie bereits festgestellt, wie bei dem vierten und fünften oder auch sechsten Ausführungsbeispiel vorstellen, wobei hier ein Schlitz 95 durch das obere Elastomerkörperteil 96h und durch die obere Hälfte des unteren Elastomerkörperteils 96j, jeweils mit Ausnahme der zentralen Füllstücke, läuft. Dieser Schlitz geht dementsprechend auch durch den oberen Bereich und mittleren Bereich des Elastomerrahmens 96.

Auf den Stirnseiten in Leitungsrichtung sind jeweils zwei Pressplatten 97 aus glasfaserverstärktem Kunststoff befestigt, die den Anpressdruck der Spannvorrichtung 93, 93', 94 auf die Elastomerteile verteilen. Pro dargestellter Hälfte sind auf jeder Seite in Durchlassrichtung jeweils zwei entlang des Schlitzes 95 geteilte Pressplatten 97 angebracht, so dass diese trotz der an ihm befestigten Pressplatten 97 weiterhin aufklappbar bleibt. Die Pressplatten 97 der Hälfte zur Aufnahme von zwei Leitungen sind blau, die zur Aufnahme von drei Leitungen sind rot gefärbt, so dass die Farbmarkierungen sich hier auf die Zahl aber auch den Maximaldurchmesser zum Einlegen geeigneter Leitungen beziehen.

An ihren Seiten zur Spannvorrichtung 93, 93', 94 hin weisen die Pressplatten 97 ein Außenprofil 98 auf, welches aus der Leitungsrichtung betrachtet hinter Teile der Spannvorrichtung 93, 93', 94, greift. Diese Profilpassung der Spannvorrichtung mit den Pressplatten 97 im Bereich des Außenprofils 98 ist in Figur 9 dargestellt. Sie verhindert durch Formschluss ein Herausziehen der Pressplatten 97 zusammen mit den dadurch gehaltenen Elastomerteilen aus dem Modul 91.

An ihrer Seite zum Schlitz 95 hin weisen die Pressplatten 97 jeweils halbkreisförmige Aussparungen auf mit einem Radius, der geringfügig größer als der größte vorgesehene Durchmesser der aufzunehmenden Leitung ist. Dadurch wird sichergestellt, dass die Leitungen durchpassen und dennoch der Anpressdruck gut verteilt wird.

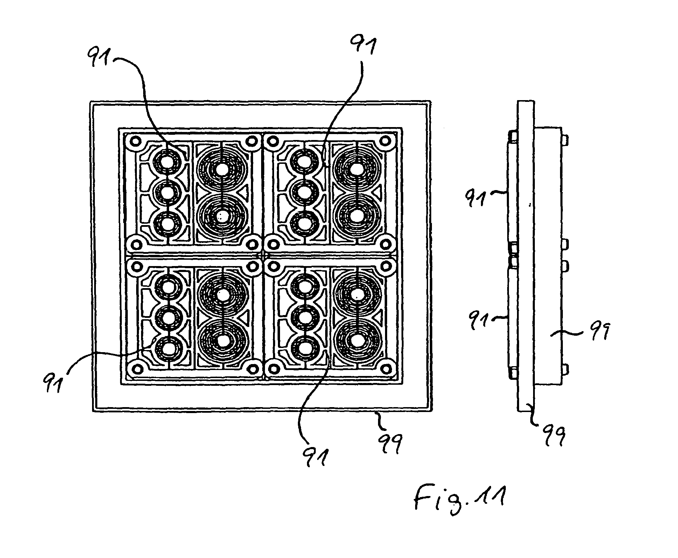

Figur 11 zeigt eine Draufsicht und eine Seitenansicht eines montierten erfindungsgemäßen Systems mit vier baugleichen erfindungsgemäßen Modulen 91 in einem Rahmen 99 aus Metall mit genau einer zusammenhängenden Durchlassöffnung, der zum Anschweißen oder zusammen mit einem Dichtungsband zum Anschrauben in einer Wandöffnung ausgelegt ist.

In diesem Ausführungsbeispiel weisen alle Module 91 eine eigene Spannvorrichtung 93, 93', 94 auf: es könnten jedoch auch ein oder zwei der vier Module 91 ohne eigene Spannvorrichtung eingesetzt werden. Weiterhin ist die Auswahl von vier baugleichen Modulen 91 hier frei getroffen, es sind ebenso Konfigurationen mit Modulen 91 zur Aufnahme sowohl unterschiedlicher Leitungsanzahl als auch unterschiedlicher Leitungsquerschnitte vorgesehen.

Im gespannten Zustand aller Module 91 dichtet jedes einzelne an seinen vier Seiten senkrecht zur Leitungsrichtung mit der außenliegenden Elastomerkörperdichtfläche jeweils unmittelbar an die benachbarten Module und an den Rahmen 99. Durch Lösen der Spannvorrichtung 93, 93', 94 eines einzelnen Moduls 91 kann dieses aus der Leitungsdurchführungssystem entnommen werden, ohne dass die verbleibenden Module 91 in ihrer Dichtwirkung bezüglich eventuell aufgenommener Leitungen oder ihrer Dichtung und Befestigung in dem Rahmen 99 beeinträchtigt werden. Dies ermöglicht auf effiziente Art und Weise einen Austausch oder ein nachträgliches Hinzufügen einer Leitung in einer bestehenden Leitungsdurchführung.

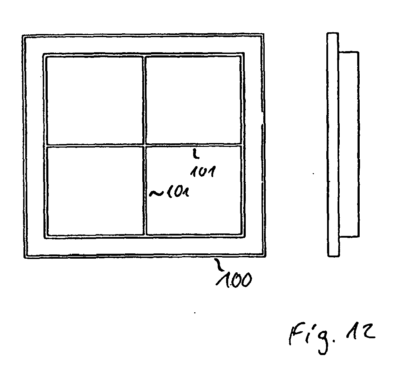

Figur 12 zeigt eine Draufsicht und eine Seitenansicht eines Rahmens 100 der mittels Stege 101 in vier Durchiassöffnungen unterteilt ist. Entsprechend diesem Beispiel sind auch Unterteilungen einer Wandöffnung mittels eines Rahmens in eine andere Mehrzahl von Durchlassöffnungen zur Aufnahme je einer Leitungsdurchführung 91 (oder auch 21 oder 51) oder je eines Leitungsdurchführungssystems bevorzugt.

## Patentansprüche

1. Leitungsdurchführung (11 - 91) zum Aufbauen eines dichtenden Verschlusses einer von einer Leitung durchsetzten Öffnung in einer Wand mit einem Elastomerkörper (12 - 92) zur dichten Anlage an der Leitung aus zumindest zwei für sich einstückigen Teilen (12a, b - 82a, b, c; 92b - j),
wobei die Elastomerkörperteile (12a, b - 82a, b, c; 92b - j) dazu ausgelegt sind, im zusammengebauten Zustand eine Folge einer Vielzahl Schichten zu bilden,
welche Schichten zum jeweils die Leitung Umschließen ausgelegt sind, und wobei eine Mehrzahl der Schichten zu einem einzigen Elastomerkörperteil (12a, b - 82a, b, c; 92b - j) gehört
und hinsichtlich ihres unterschiedlichen Abstandes zur Mittenachse der Leitung benachbarte Schichten zu verschiedenen Elastomerkörperteilen (12a, b - 82a, b, c; 92b - j) gehören,
**dadurch gekennzeichnet, dass** hinsichtlich der den Abstand zur Leitung bestimmenden Richtung mindestens zwei Elastomerkörperteile (12a, b - 82a, b, c; 92b - j), zu denen jeweils eine Mehrzahl der Schichten gehört, vorgesehen sind, und
durch eine Spanneinrichtung (13 - 93, 14 - 94) zum Spannen des Elastomer körpers (12 - 92) und **dadurch** dichten Anpressen des Elastomerkörpers (12 - 92) auf die Leitung.

2. Leitungsdurchführung (11 - 61, 81, 91) nach Anspruch 1, bei der alle Schichten in der Schichtenfolge jeweils in einer Mehrzahl zu jeweils einem einzigen Elastomerkörperteil (12a, b - 62a, b; 82a, b, c; 92b - j) gehören.

3. Leitungsdurchführung (11 - 61, 81, 91) nach Anspruch 2, die hinsichtlich der den Abstand zur Leitung bestimmenden Richtung pro durchzuführende Leitung zwischen zwei und drei Elastomerkörperteile (12a, b - 62a, b; 82a, b, c; 92b - j) aufweist.

4. Leitungsdurchführung (81) nach einem der vorstehenden Ansprüche, bei der ein Elastomerkörpertell (82c) einen Funktionszusatz, nämlich dispergierte Festkörperpartikel zur EMV-Abschirmung durch Leitfähigkeit, zur Röntgenabsorption oder zur Verbesserung der Brandschutzeigenschaften, enthält.

5. Leitungsdurchführung (11 - 91) nach einem der vorstehenden Ansprüche, bei der die Schichten zumindest zweier Elastomerkörperteile (12a, b - 82a, b, c; 92b - j) jeweils zu einer Mittenachse der Leitung rotationssymmetrische mit höchstens einer Ausnahme hohle Körper sind, die an einem Ende über zu der Mittenachse senkrechte Wände miteinander verbunden sind.

6. Leitungsdurchführung (61) nach Anspruch 5, bei der die inneren und äußeren Mantelflächen der Schichten zumindest teilweise konisch sind, wobei der halbe Öffnungswinkel des Konus höchstens 10° beträgt.

7. Leitungsdurchführung nach einem der vorstehenden Ansprüche, bei der zu einer Mittenachse der Leitung senkrechte Grenzflächen zwischen benachbarten Elastomerkörperteilen (12a, b - 82a, b, c; 92b - j) innerhalb der Schichtenfolge randseitig in den äußeren 10 % der Gesamtelastomerkörperlänge in Leitungsrichtung und in Bezug auf die Schichtenfolge außen zwischen 20 % und 80 % der Gesamtlänge des Elastomerkörpers (12 - 92) in Leitungsrichtung liegen.

8. Leitungsdurchführung nach einem der vorstehenden Ansprüche, bei der der Elastomerkörper (41 - 61) eine zwischen 20 % und 80 % der Gesamtlänge des Elastomerkörpers (41 - 61) In Leitungsrichtung liegende Verdickung (47 - 67) des Querschnitts senkrecht zur Leitungsrichtung aufweist.

9. Leitungsdurchführung nach einem der vorstehenden Ansprüche, bei der die Elastomerkörperteile (12a, b - 82a, b, c; 92b - j) Spritzgussteile, Pressteile oder Transferpressteile sind.

10. Leitungsdurchführung nach einem der vorstehenden Ansprüche, bei der Zwischenräume zwischen den Schichten eines Elastomerkörperteils (12a, b - 82a, b, c; 92b - j) an einer den Schichten entgegengesetzten Stirnfläche des Elastomerkörperteils (12a, b - 82a, b, c; 92b - j) durch Einkerbungen in besagter Stirnfläche markiert sind.

11. Leitungsdurchführungssatz mit einer Mehrzahl Leitungsdurchführungen (91) nach einem der vorstehenden Ansprüche, die untereinander verschieden sind, jedoch jeweils einen Elastomerkörper aufweisen, der zu je einem Elastomerkörper der anderen Leitungsdurchführungen (91) in dem Satz identisch ist.

12. Leitungsdurchführungssystem mit einer Mehrzahl Leitungsdurchführungen (91) nach einem der Ansprüche 1 - 10 zum Aufbauen eines dichtenden Verschlusses einer einzigen Öffnung in einer Wand mit dieser Mehrzahl Leitungsdurchführungen (91) als Module,
wobei die Mehrzahl Leitungsdurchführungen jeweils aufweisen:
eine solche Querschnittsfläche senkrecht zur Leitungsrichtung im Verhältnis zu der Querschnittsfläche der Wandöffnung, dass sie gemeinsam zum Dichten eingesetzt werden können,
jeweils eine eigene Spannvorrichtung (93, 94) zum individuellen Spannen, die in Leitungsrichtung wirkt und damit senkrecht zur Leitungsrichtung eine Aufweitung des Elastomerkörpers bewirken kann, und
eine jeweilige Dichtfläche eines jeweiligen Elastomerteils (96), die in gespanntem Zustand der Spannvorrichtung (93, 94) auf dem Umfang der Leitungsdurchführung (91) senkrecht zur Leitungsrichtung außen liegt

13. Verwendung einer Leitungsdurchführung (11 - 91) nach einem der Ansprüche 1 -10 oder eines Leitungsdurchführungssatzes nach Anspruch 11 oder eines Leitungsdurchführungssystems nach Anspruch 12 zur Dimensionsanpassung des Elastomerkörpers (12 - 92) durch Entfernen zumindest einer Schicht eines Elastomerkörperteils (12a. b - 82a, b, c; 92b - j) aus der Folge.

14. Verwendung nach Anspruch 13, bei der die zumindest eine Schicht zur Dimensionsanpassung um einen Verbindungssteg zu einer anderen Schicht desselben Elastomerkörperteils (12a, b - 82a, b, c; 92b - j) geklappt wird und mit dem Elastomerkörperteil (12a, b - 82a, b, c; 92b - j) verbunden bleibt.

15. Verwendung einer Leitungsdurchführung (11 - 91) nach einem der Ansprüche 1 - 10 oder eines Leitungsdurchführunngssatzes nach Anspruch 11 oder eines Leitungsdurchführungssystems nach Anspruch 12 auch in Verbindung mit Anspruch 13 oder 14, zum Abdichten einer Strom-, Gas-, Wasser-, Wärme-, Telekommunlkations-, Signal-, oder Datenleitung in einer Gebäudewand, Schiffswand oder Gehäusewand.

16. Verfahren zur Herstellung einer Leitungsdurchführung (11 - 91), welche zum Aufbauen eines dichtenden Verschlusses einer von einer Leitung durchsetzten Öffnung in einer Wand ausgelegt ist, mit den Schritten:
Erstellung mindestens zweier für sich einstückiger Elastomerkörpertelle (12a, b - 82a, b, c; 92b - j) mit jeweils einer Mehrzahl Schichten, welche Schichten dazu ausgelegt sind, die Leitung zu umschließen, wobei zwischen den Schichten Zwischenräume gebildet werden, die mindestens der Stärke zugeordneter Schichten eines jeweils anderen Elastomerkörperteils (12a, b - 82a ,b, c; 92b - j) entsprechen,
Zusammenfügen der Elastomerkörperteile (12a, b - 82a, b, c; 92b - j) zu einem Elastomerkörper (12 - 92), wobei Schichten in die Zwischenräume eingebracht werden, sodass eine Folge einer vielzahl Schichten gebildet wird, in der hinsichtlich ihres unterschiedlichen Abstandes zur Mittenachse der Leitung benachbarte Schichten zu verschiedenen Elastomerkörperteilen (12a, b - 82a, b, c; 92b - j) gehören.
Hinzufügen einer Spanneinrichtung (13 - 93, 14 - 94) zum Spannen des aus den Elastomerkörperteilen (12a, b - 82a, b, c; 92b - j) aufgebauten Elastomerkörpers (12 - 92) und **dadurch** dichten Anpressen des Elastomerkörpers (12 - 92) auf die Leitung.

17. Verfahren nach Anspruch 16, bei dem die Schichten und die Zwischenräume unter Verwendung einer Form hergestellt werden, die mit Elastomermaterial gefüllt wird.

## Claims

1. A conduit duct (11 - 91) for setting up a sealing of an opening in a wall penetrated by a conduit, having
an elastomer body (12 - 92) for contacting said conduit sealingly, made of at least two parts (12a, b-82a, b, c; 92b-j) being integral respectively,
wherein said elastomer body parts (12a, b - 82a, b, c; 92b - j) are adapted for forming a sequence of a multitude of layers in an assembled state,
which layers are adapted for enclosing said conduit respectively, and wherein a plurality of said layers belongs to one single elastomer body part (12a, b - 82a, b, c; 92b - j)
and layers adjacent with respect to their different distance to a central axis of said conduit belong to different elastomer body parts (12a, b - 82a, b, c; 92b - j),
**characterized in that** at least two elastomer body parts (12a, b - 82a, b, c; 92b - j), to which a plurality of said layers belongs respectively, are provided with respect to the direction defining the distance to said conduit, and
by a tensioning device (13 - 93, 14 - 94) for tensioning said elastomer body (12 - 92) and thereby pressing said elastomer body (12 - 92) onto said conduit sealingly.

2. The conduit duct (11 - 61, 81, 91) according to claim 1, wherein all layers in said sequence of layers belong in a plurality respectively to one single respective elastomer body part (12a, b - 82a, b; 82a, b, c; 92b - j).

3. The conduit duct (11 - 61, 81, 91) according to claim 2, which comprises between two and three elastomer body parts (12a, b - 62a, b; 82a, b, c; 92b - j) per conduit to be led through, with respect to said direction defining the distance to said conduit.

4. The conduit duct (81) according to one of the preceding claims, wherein an elastomer body part (82c) contains a functional addition, namely dispersed solid particles for an EMI-shielding by conductivity, for an X-ray absorption or for improving fire protection properties.

5. The conduit duct (11 - 91) according to one of the preceding claims, wherein layers of at least two elastomer body parts (12a, b - 82a, b, c; 92b - j) are rotationally symmetric to a central axis of said conduit and are, besides one exception at maximum, hollow bodies, which are connected to each other at an end by walls perpendicular to said central axis.

6. The conduit duct (61) according to claim 5, wherein inner and outer lateral surfaces of said layers are at least partially conical, wherein the half of the cone angle is 10° at maximum.

7. The conduit duct according to one of the preceding claims, wherein interfaces, being perpendicular to a central axis of said conduit, between adjacant elastomer body parts (12a, b - 82a, b, c; 92b - j) are arranged peripherically inside said sequence of layers, in the outer 10 % of the total elastomer body length in a conduit direction, and are arranged outside, with respect to said sequence of layers, between 20 % and 80 % of said total length of said elastomer body (12 - 92) in said conduit direction.

8. The conduit duct according to one of the preceding claims, wherein said elastomer body (41 - 61) comprises a thickening of the cross section perpendicular to the conduit direction, arranged between 20 % and 80 % of the total length of said elastomer body (41 - 61).

9. The conduit duct according to one of the preceding claims, wherein said elastomer body parts (12a, b - 82a, b, c; 92b - j) are injection-molded parts, pressed parts or transfer-pressed parts.

10. The conduit duct according to one of the preceding claims, wherein interspaces between said layers of an elastomer body part (12a, b - 82a, b, c; 92b - j) are marked by notches in a face of said elastomer body part (12a, b - 82a, b, c; 92b - j), which face is opposed to said layers of said elastomer body part (12a, b - 82a, b, c; 92b - j).

11. A conduit duct set having a plurality of conduit ducts (91) according to one of the preceding claims, which are different to each other, but comprise an elastomer body respectively, which is identical to an elastomer body of said other conduit ducts (91) of said set respectively.

12. A conduit duct system having a plurality of conduit ducts (91) according to one of claims 1-10, for setting up a sealing of one single opening in a wall with said plurality of conduit ducts (91) as modules,
wherein said plurality of conduit ducts comprise respectively:
such a cross sectional area perpendicular to the conduit direction in relation to the cross sectional area of said wall opening that they can be inserted together for sealing,
an own tensioning device (93, 94) respectively, for tensioning individually, which acts in said conduit direction and thus can effect a widening of said elastomer body perpendicularly to said conduit direction, and
a respective sealing surface of each respective elastomer part (96) arranged, when said tensioning device (93, 94) is tensioned, outside, with respect to a direction perpendicular to said conduit direction, on the circumference of said conduit duct (91).

13. A use of the conduit duct (11-91) according to one of claims 1-10 or of the conduit duct set according to claim 11 or of the conduit duct system according to claim 12, for dimensionally adapting said elastomer body (12-92) by removing at least one layer of an elastomer body part (12a, b-82a, b, c; 92b-j) of said sequence.

14. The use according to claim 13, wherein said at least one layer is folded around a connecting web to another layer of said same elastomer body part (12a, b-82a, b, c; 92b-j) and therein remains connected with said elastomer body part (12a, b-82a, b, c; 92b-j).

15. A use of the conduit duct (11-91) according to one of claims 1-10 or of the conduit duct set according to claim 11 or of the conduit duct system according to claim 12, also in combination with claim 13 or 14, for sealing an electric current, gas, water, heat, telecommunications, signal, or data conduit in a wall of a building, a wall of a ship, or a wall of a housing.

16. A method for manufacturing a conduit duct (19 91), which is adapted for setting up a sealing of an opening in a wall penetrated by a conduit, comprising the steps:
manufacturing at least two elastomer body parts (12a, b - 82a, b, c; 92b - j) being integral respectively and having a plurality of layers respectively, which layers are adapted for enclosing said conduit sealingly, wherein interspaces are formed between said layers, which correspond to the thickness of assigned layers of a respective other elastomer body part (12a, b - 82a, b, c; 92b - j) at the minimum,
assembling said elastomer body parts (12a, b - 82a, b, c; 92b - j) to an elastomer body (12 - 92), wherein layers are inserted into said interspaces, so that a sequence of a multitude of layers is formed, in which layers being adjacent with respect to their different distance to the central axis of said conduit belong to different elastomer body parts (12a, b - 82a, b, c; 92 - j),
adding a tensioning device (13 - 93, 14 - 94) for tensioning said elastomer body (12 - 92) assembled of said elastomer body parts (12a, b - 82a, b, c; 92b - j) and thereby pressing said elastomer body (12 - 92) sealingly onto said conduit.

17. The method according to claim 16, wherein said layers and said interspaces are manufactured using a mold, which is filled with elastomer material.

## Revendications

1. Passage de conduite (11 - 91) pour la mise en place d'une fermeture étanchéifiante d'une ouverture traversée par une conduite dans une paroi avec un corps en élastomère (12 - 92) pour l'appui étanche sur la conduite constituée d'au moins deux parties (12a, b - 82a, b, c ; 92b - j) monobloc chacune, les parties du corps en élastomère (12a, b - 82a, b, c ; 92b - j) étant conçues pour former dans l'état assemblé une succession d'une pluralité de couches, lesquelles couches sont conçues pour entourer chacune la conduite, et une pluralité des couches faisant partie d'une seule partie du corps en élastomère (12a, b - 82a, b, c; 92b - j)
et des couches voisines par rapport à leur distance différente à l'axe médian de la conduite faisant partie de différentes parties du corps en élastomère (12a, b - 82a, b, c; 92b - j),
**caractérisé en ce qu'**au moins deux parties du corps en élastomère (12a, b - 82a, b, c ; 92b - j), comprenant chacune une pluralité des couches, sont prévues en ce qui concerne la direction déterminant la distance à la conduite, et par un dispositif de serrage (13 - 93, 14 - 94) pour le serrage du corps en élastomère (12 - 92) et ainsi l'application étanche du corps en élastomère (12 - 92) sur la conduite.

2. Passage de conduite (11 - 61, 81, 91) selon la revendication 1, sur lequel toutes les couches dans la succession de couches font partie respectivement en majorité de respectivement une seule partie du corps en élastomère (12a, b - 62a, b ; 82a, b, c ; 92b - j).

3. Passage de conduite (11 - 61, 81, 91) selon la revendication 2, qui présente entre deux et trois parties du corps en élastomère (12a, b - 62a, b ; 82a, b, c; 92b j) par conduite à traverser en ce qui concerne la direction déterminant la distance à la conduite.

4. Passage de conduite (81) selon l'une quelconque des revendications précédentes, sur lequel une partie du corps en élastomère (82c) contient un additif de fonction, à savoir des particules de solide dispersées pour la protection CEE par conductibilité, pour l'absorption de rayons X ou pour l'amélioration des propriétés ignifuges.

5. Passage de conduite (11 - 91) selon l'une quelconque des revendications précédentes, sur lequel les couches d'au moins deux parties du corps en élastomère (12a, b - 82a, b, c; 92b - j) sont des corps symétriques en rotation respectivement par rapport à un axe médian de la conduite et creux à une exception près au maximum, lesquels corps sont reliés les uns aux autres sur une extrémité au moyen de parois perpendiculaires à l'axe médian.

6. Passage de conduite (61) selon la revendication 5, sur lequel les surfaces d'enveloppe intérieures et extérieures des couches sont au moins partiellement coniques, le demi-angle d'ouverture du cône étant au maximum de 10°.

7. Passage de conduite selon l'une quelconque des revendications précédentes, sur lequel des surfaces limites perpendiculaires à un axe médian de la conduite entre des parties voisines du corps en élastomère (12a, b - 82a, b, c ; 92b - j) se situent à l'intérieur de la succession de couches côté bordure dans les 10 % extérieurs de la longueur globale du corps en élastomère en direction de la conduite et par rapport à la succession de couches à l'extérieur entre 20 % et 80 % de la longueur totale du corps en élastomère (12 - 92) dans le sens de la conduite.

8. Passage de conduite selon l'une quelconque des revendications précédentes, sur lequel le corps en élastomère (41 - 61) présente un épaississement (47 - 67) de la section se situant entre 20 % et 80 % de la longueur totale du corps en élastomère (41 - 61) dans la direction de la conduite, perpendiculairement à la direction de la conduite.

9. Passage de conduite selon l'une quelconque des revendications précédentes, sur lequel les parties du corps en élastomère (12a, b - 82a, b, c ; 92b - j) sont des pièces moulées par injection, des pièces pressées ou des pièces moulées par transfert.

10. Passage de conduite selon rune quelconque des revendications précédentes, sur lequel des interstices entre les couches d'une partie du corps en élastomère (12a, b - 82a, b, c ; 92b - j) sur une surface frontale, opposée aux couches, de la partie du corps en élastomère (12a, b - 82a, b, c ; 92b - j) sont repérées par des entailles dans ladite surface frontale.

11. Ensemble de passages de conduite comprenant une pluralité de passages de conduite (91) selon l'une quelconque des revendications précédentes, qui sont différents les uns des autres, et présentent respectivement un corps en élastomère, qui est identique dans l'ensemble par rapport à respectivement un corps en élastomère des autres passages de conduite (91).

12. Système de passages de conduite comprenant une pluralité de passages de conduite (91) selon l'une quelconque des revendications 1 à 10 pour la mise en place d'une fermeture étanchéifiante d'une unique ouverture dans une paroi présentant cette pluralité de passages de conduite (91) comme modules,
la pluralité de passages de conduite présentant respectivement :
une telle surface de section perpendiculairement à la direction de la conduite par rapport à la surface de section de l'ouverture de paroi, de telle sorte qu'ils peuvent être utilisés conjointement pour l'étanchéité,
à chaque fois un dispositif de serrage (93, 94) propre pour le serrage individuel, qui agit dans le sens de la conduite et peut donc entraîner, perpendiculairement à la direction de la conduite, un élargissement du corps en élastomère, et
une surface d'étanchéité respective d'une partie en élastomère (96) respective, qui est disposée, lorsque le dispositif de serrage (93, 94) est serré, à l'extérieur, par rapport à une direction perpendiculaire à la direction de la conduite, sur le pourtour du passage de conduite (91).

13. Utilisation d'un passage de conduite (11 - 91) selon l'une quelconque des revendications 1 - 10 ou d'un ensemble de passages de conduit selon la revendication 11 ou d'un système de passages de conduite selon la revendication 12 pour rajustement de la dimension du corps en élastomère (12 - 92) pour l'enlèvement d'au moins une couche d'une partie du corps en élastomère (12a, b - 82a, b, c ; 92b - j) provenant de la succession de couches.

14. Utilisation selon la revendication 13, dans laquelle la au moins une couche est rabattue, pour l'ajustement de la dimension, d'une nervure de liaison vers une autre couche de la même partie du corps en élastomère (12a, b - 82a, b, c; 92b - j) et reste reliée à la partie du corps en élastomère (12a, b - 82a, b, c; 92b - j).

15. Utilisation d'un passage de conduite (11 - 91) selon l'une quelconque des revendications 1-10 ou d'un ensemble de passages de conduite selon la revendication 11 ou d'un système de passages de conduite selon la revendication 12 également en liaison avec la revendication 13 ou 14, pour l'étanchéité d'une conduite de courant, de gaz, d'eau, de chaleur, de télécommunication, de signal ou de données dans une paroi de bâtiment, une paroi de bateau ou une paroi de boîtier.

16. Procédé pour fabriquer un passage de conduite (11 - 91), qui est conçu pour la mise en place d'une fermeture étanchéifiante d'une ouverture traversée par une conduite dans une paroi, présentant les étapes suivantes :
fabrication d'au moins deux parties du corps en élastomère (12a, b - 82a, b, c ; 92b - j) monobloc chacune comprenant respectivement une pluralité de couches, lesquelles sont conçues pour entourer la conduite, des interstices étant formées entre les couches, lesquelles correspondent au moins à l'épaisseur de couches attribuées d'une autre partie respective du corps en élastomère (12a, b - 82a, b, c ; 92b - j),
assemblage des parties du corps en élastomère (12a, b - 82a, b, c ; 92b - j) pour former un corps en élastomère (12 - 92), des couches étant introduites dans les interstices, de sorte qu'une succession d'une pluralité de couches est formée, dans laquelle des couches voisines par rapport à leur distance différente à l'axe médian de la conduite font partie de différentes parties du corps en élastomère (12a, b - 82a, b, c ; 92b - j),
ajout d'un système de serrage (13 - 93, 14 - 94) pour le serrage du corps en élastomère (12 - 92) conçu à partir des parties du corps en élastomère (12a, b - 82a, b, c ; 92b - j) et donc pressage étanche du corps en élastomère (12 - 92) sur la conduite.

17. Procédé selon la revendication 16, dans lequel les couches et les interstices sont fabriquées en utilisant un moule qui est rempli avec du matériau élastomère.
